# EUROPEAN PATENT APPLICATION

(11) **EP 3 798 056 A1**
(43) Date of publication of application: **31.03.2021**
(21) Application number: 20207501.6
(22) Date of filing: 11.05.2016
(51) Int. Cl.: B60Q 1/26, B60Q 1/30, B60Q 1/48, B60Q 1/52, B60Q 1/54

(54) **VEHICLE COMPRISING A REAR COMBINATION LAMP COMPRISING A DISPLAY**

(30) Priority: 11.05.2015 KR 20150065482
(62) Divisional of application: 16169192.8
(71) Applicant: ZKW Group GmbH, 3250 Wieselburg (AT)
(72) Inventor: KIM, Geunhyeong, 07336 Seoul (KR)
(74) Representative: Patentanwaltskanzlei Matschnig & Forsthuber OG

(57) **Abstract**

Vehicle (700) comprising a camera (195) and a rear combination lamp (200), the rear combination lamp (200) comprising:
- a display (250) disposed on a vehicle (700), the display (250) comprising a plurality of light emitting devices,
- an interface unit (280) configured to receive exterior style data, and
- a processor (270) configured to control the display to perform exterior styling using the plurality of light emitting devices, wherein the processor (270) is configured to control the display (250) to perform the exterior styling based on the received exterior style data, wherein the rear combination lamp (200) is further comprising:
an interface unit configured to receive location information about a road, wherein the processor is configured to:
- determine the at least one condition related to driving of the vehicle by determining traffic laws applied to the road,
- select, from among multiple exterior style images, the at least one exterior style image to display by selecting, from among multiple exterior style images, at least one exterior style image to display based on the traffic laws applied to the road.

## Description

### TECHNICAL FIELD

The present disclosure generally relates to a vehicle comprising a rear lamp combination.

### BACKGROUND

A vehicle is an apparatus that moves into a specific direction as a driver operates. A common example of a vehicle is a car.

A vehicle is equipped with various lamps including a headlamp and a rear combination lamp. The rear combination lamp delivers information, such as braking and turning, to pedestrians or other drivers.

### SUMMARY

A rear combination lamp for a vehicle includes a display to implement exterior styling. A user can change the design of the rear combination lamp without replacing the rear combination lamp.

In addition, the rear combination lamp includes a display to deliver various information to other vehicles.

All the below described embodiment may combined cumulatively or alternatively to be an object of the present invention.

In accordance with the present invention, a vehicle comprises the features of claim 1. In an embodiment, the rear combination lamp, comprising: a display disposed on a vehicle, the display comprising a plurality of light emitting devices and being oriented to display information toward one or more other vehicles located to a rear of the vehicle on which the display is disposed; and a processor configured to control the display to perform exterior styling using the plurality of light emitting devices by: determining at least one condition related to driving of the vehicle on which the display is disposed, selecting, from among multiple exterior style images, at least one exterior style image to display based on the determined at least one condition related to driving of the vehicle, and controlling the display to display the at least one exterior style image selected.

In a possible embodiment, the display may include organic light emitting diodes (OLED).

In a possible embodiment, the processor may be configured to control the display to present an image corresponding to a stop lamp, taillight, turn signal lamp, fog light, sidelight or reverse light on at least one part of the display.

In a possible embodiment, the processor may be configured to set a maximum value and a minimum value of an intensity of light outputted from the display, and is configured to control the plurality of light emitting devices to output light with an intensity between the maximum value and the minimum value.

In a possible embodiment, the processor may be configured to control the display to adjust an intensity of light outputted from the display based on a driving environment.

In a possible embodiment, the processor may be configured to set the intensity of light outputted from the display to be higher in daytime than at night.

In a possible embodiment, the processor may be configured to control the display to adjust the intensity of light outputted from the display based on weather.

In a possible embodiment, the rear combination may further comprise an interface unit configured to receive distance information that indicates a distance between the vehicle and another vehicle that follows the vehicle. The processor may be configured to, based on the distance information, adjust an intensity of light generated by the plurality of light emitting devices or the processor is configured to, based on the distance information, control a pattern of light generated by turning on or off the plurality of light emitting devices.

In a possible embodiment, the rear combination may further comprise a memory configured to store exterior style data. The processor may be configured to control the display to perform the exterior styling based on the exterior style data stored in the memory.

In a possible embodiment, the memory may store default exterior style data or exterior style data applied in response to user input.

In a possible embodiment, the rear combination may further comprise an interface unit configured to receive sensed user facial expression information from an internal camera. The processor may be configured to determine the at least one condition related to driving of the vehicle by determining the sensed user facial expression information, select, from among multiple exterior style images, the at least one exterior style image to display by selecting, from among multiple exterior style images, at least one exterior style image to display based on the sensed user facial expression information.

In a possible embodiment, the rear combination may further comprise an interface unit configured to receive exterior style data. The processor may be configured to control the display to perform the exterior styling based on the received exterior style data.

In a possible embodiment, exterior style data may be received from an external server based on payment of a fee for use of the exterior style data.

In a possible embodiment, the exterior style data may be received from a mobile terminal based on payment of a fee for use of the exterior style data.

In a possible embodiment, the exterior style data may be generated in response to user input.

In a possible embodiment, the exterior style data may be generated from an image of one or more vehicles detected by a camera.

In a possible embodiment, the camera may be provided in the vehicle. The camera may be configured to acquire a front view image of the vehicle or a surrounding image of the vehicle, and wherein the camera is configured to detect the one or more vehicles in the front view image or the surrounding image of the vehicle.

According to the invention, the rear combination may further comprise an interface unit configured to receive location information about a road. The processor may be configured to determine the at least one condition related to driving of the vehicle by determining traffic laws applied to the road, select, from among multiple exterior style images, the at least one exterior style image to display by selecting, from among multiple exterior style images, at least one exterior style image to display based on the traffic laws applied to the road.

In a possible embodiment, the processor may be configured to control the display to present an image corresponding to a stop lamp, taillight, turn signal lamp, fog light, sidelight or reverse light on at least one part of the display. The processor may be configured to control the display to perform the exterior styling based on the traffic laws for a size, disposition, light intensity, or color of a display.

In a possible embodiment, the display may be located on a rear window glass of the vehicle.

In a possible embodiment, the processor may be configured to control the display to present an image corresponding to a stop lamp, taillight, turn signal lamp, fog light, sidelight or reverse light on at least one area of the display.

In a possible embodiment, an image corresponding to the stop lamp may comprise an image corresponding to a center high mounted stop lamp (CHMSL).

In a possible embodiment, the display may comprise a first display unit adapted to face outward of the vehicle and a second display unit adapted to face inward of the vehicle. The processor may be configured to control the first display unit to perform the exterior styling. The processor may be configured to control the second display unit to provide predetermined content.

In accordance with one embodiment of the present invention, A vehicle comprising a rear combination lamp, wherein the rear combination lamp comprising a display disposed on a vehicle, the display comprising a plurality of light emitting devices and being oriented to display information toward one or more other vehicles located to a rear of the vehicle on which the display is disposed; and a processor configured to control the display to perform exterior styling using the plurality of light emitting devices by: determining at least one condition related to driving of the vehicle on which the display is disposed, selecting, from among multiple exterior style images, at least one exterior style image to display based on the determined at least one condition related to driving of the vehicle, and controlling the display to display the at least one exterior style image selected.

In a possible embodiment, the vehicle may further comprise a driver assistance system configured to: acquire a front view image of the vehicle or a surrounding image of the vehicle; detect one or more vehicles in the front view image or in the surrounding image; generate exterior style data based on one or more rear combination lamps of the detected one or more vehicles; and provide the exterior style data to the rear combination lamp of the vehicle.

In a possible embodiment, the vehicle may further comprise a display apparatus configured to display, when a plurality of exterior styles is generated by the driver assistance system, the plurality of exterior styles, and receive user input that selects one of the displayed exterior styles. The processor may be configured to control the display to perform the exterior styling based on an image of the selected exterior style

In a possible embodiment, the vehicle may further comprise a display apparatus for vehicles configured to display at least one exterior style image generated based on user input, and provide, to the rear combination lamp and based on the exterior style image being selected, an exterior style datum corresponding to the exterior style image.

In a possible embodiment, the vehicle may further comprise a communication unit configured to communicate with an external server to receive exterior style data from the external server, and provide the received exterior style data to the rear combination lamp.

In a possible embodiment, the vehicle may further comprise a display apparatus configured to display a plurality of exterior style images based on the exterior style data being received from the external server, and receive user input that selects one of the displayed exterior style images. The processor may be configured to control the display to perform the exterior styling based on the selected exterior style image.

In a possible embodiment, the communication unit may exchange payment information with the external server.

In a possible embodiment, the vehicle may further comprise a communication unit configured to communicate with a mobile terminal to receive exterior style data from the mobile terminal, and provide the received exterior style data to the rear combination lamp.

In a possible embodiment, the vehicle may further comprise a display apparatus configured to display, based on the exterior style data being received from the mobile terminal, a plurality of exterior style images, and receive user input that selects one of the displayed exterior style images. The processor may be configured to control the display such that exterior styling is implemented according to the selected exterior style image.

In a possible embodiment, the vehicle may further comprise a display apparatus configured to display, based on a plurality of exterior style data being stored, images of a plurality of exterior styles corresponding to the plurality of exterior style data, and receive user input that selects one of the displayed exterior styles. The processor is configured to control the display to perform the exterior styling based on the selected exterior style.

### BRIEF DESCRIPTION OF THE DRAWINGS

FIG. 1A is a diagram illustrating an example exterior of a vehicle including a rear combination lamp.
FIG. 1B is a diagram illustrating an example exterior of a vehicle including a rear combination lamp.
FIG. 2 is a diagram illustrating an example rear combination lamp, taken along line A-A in FIG. 1B.
FIG. 3 is a diagram illustrating an example rear combination lamp.
FIG. 4 is a diagram illustrating an example vehicle.
FIG. 5 is a diagram illustrating an example camera attached to the vehicle.
FIG. 6A is a diagram illustrating an example camera attached to the vehicle.
FIG. 6B is a diagram illustrating an example camera attached to the vehicle.
FIG. 7A is a diagram illustrating an example interior of a driver assistance system.
FIG. 7B is a diagram illustrating an example interior of a driver assistance system.
FIG. 7C is a diagram illustrating an example interior of a driver assistance system.
FIG. 8A is a diagram illustrating an example rear combination lamp controlling the light intensity of light output from a display based on a driving environment.
FIG. 9A is a diagram illustrating an example rear combination lamp controlling the light intensity of light output from a display based on a driving environment.
FIG. 9B is a diagram illustrating an example rear combination lamp controlling the light intensity of light output from a display based on a driving environment.
FIG. 10A is a diagram illustrating an example rear combination lamp controlling a display based on distance-to-following vehicle information.
FIG. 10B is a diagram illustrating an example rear combination lamp controlling a display based on distance-to-following vehicle information.
FIG. 11A is a diagram illustrating an example flow of exterior style data. FIG. 11B is a diagram illustrating an example flow of exterior style data.
FIG. 12A is a diagram illustrating an example rear combination lamp controlling a display based on user facial expression information. FIG. 12B is a diagram illustrating an example rear combination lamp controlling a display based on user facial expression information.
FIG. 13 is a diagram illustrating an example rear combination lamp displaying predetermined information on a display.
FIG. 14 is a diagram illustrating an example rear combination lamp displaying predetermined information on a display.
FIG. 15 is a diagram illustrating an example rear combination lamp displaying predetermined information on a display.
FIG. 16 is a diagram illustrating an example display formed on a rear window glass of a vehicle. FIG. 17 is a diagram illustrating an example display formed on a rear window glass of a vehicle.
FIG. 18 is a diagram illustrating an example vehicle receiving exterior style data. FIG. 19 is a diagram illustrating an example operation of selecting one of a plurality of rear combination data.
FIG. 20 is a diagram illustrating an example display apparatus for generating exterior style data based on a user input. FIG. 21 is a diagram illustrating an example exterior styling performed based on an image acquired through a driver assistance system.
FIG. 22 is a diagram illustrating an example exterior styling performed based on an image acquired through a driver assistance system. FIG. 23 is a diagram illustrating an example exterior styling performed based on exterior style data received from an external device.

Like reference numbers and designations in the various drawings indicate like elements.

### DETAILED DESCRIPTION

A vehicle described in this specification may include a car and a motorcycle. Hereinafter, description will be given focusing on a car as the vehicle.

The vehicle described in this specification may include a motor vehicle equipped with an internal combustion engine as a power source, a hybrid vehicle equipped with both an engine and an electric motor as a power source, and an electric vehicle equipped with an electric motor as a power source.

In the description given below, the left side of a vehicle means the left side with respect to the forward driving direction of the vehicle, and the right side of the vehicle means the right side with respect to the forward driving direction of the vehicle.

In the description given below, the term "front" indicates the forward driving direction of the vehicle, and "rear" indicates the rearward driving direction of the vehicle.

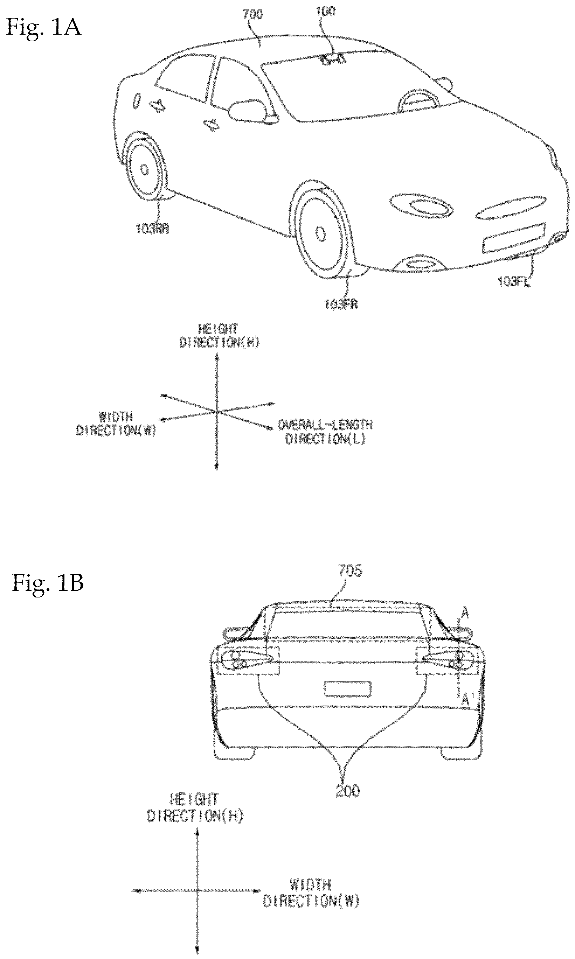

FIG. 1A illustrates an example exterior of a vehicle including a rear combination lamp. FIG. 1B illustrates an example exterior of a vehicle including a rear combination lamp.

Referring to FIG. 1, a vehicle 700 may include wheels 103FR, 103FL, 103RR rotated by a power source, a driver assistance system 100 provided in the vehicle 700, and a rear combination lamp 200.

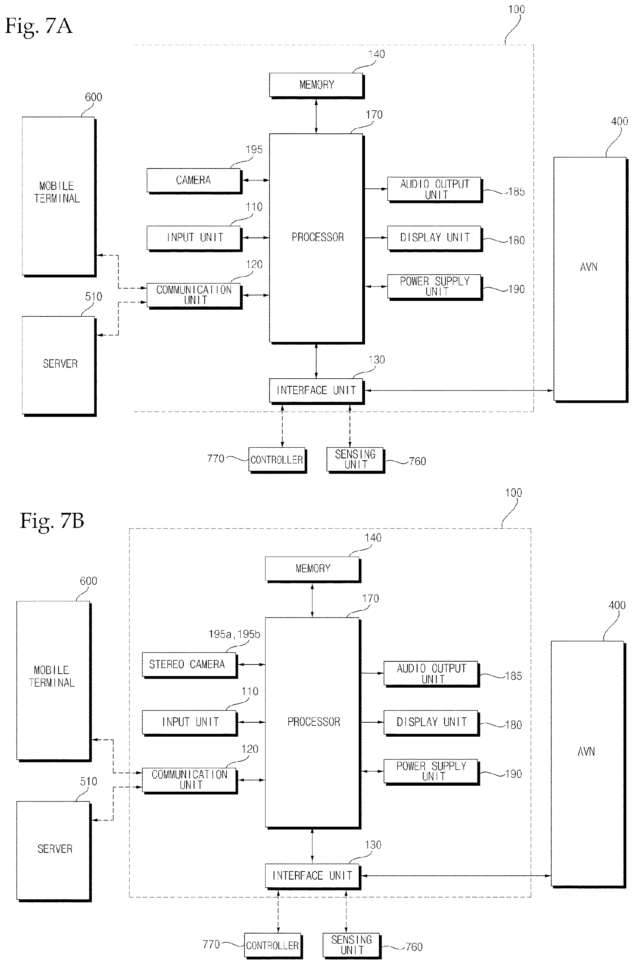

The driver assistance system 100 may be provided with at least one camera, and images acquired by the at least one camera may be signal-processed in a processor 170 (see FIGS. 7A to 7C).

In the illustrated example, the driver assistance system 100 is provided with two cameras.

The rear combination lamp includes various lamps attached to the back of the vehicle 700. The rear combination lamp may include at least one of a stop lamp, a taillight, a turn signal lamp, a fog light, a sidelight and a reverse light.

Meanwhile, the overall length refers to the length of the vehicle 700 from the front to back of the vehicle, the width refers to width of the vehicle 700, and the height refers to the distance from the bottom of a wheel to the roof of the vehicle. In the description below, the overall-length direction L may indicate a direction in which measurement of overall length of the vehicle 700 is performed, the width direction W may indicate a direction in which measurement of width of the vehicle 700 is performed, and the height direction H may indicate a direction in which measurement of height of the vehicle 700 is performed.

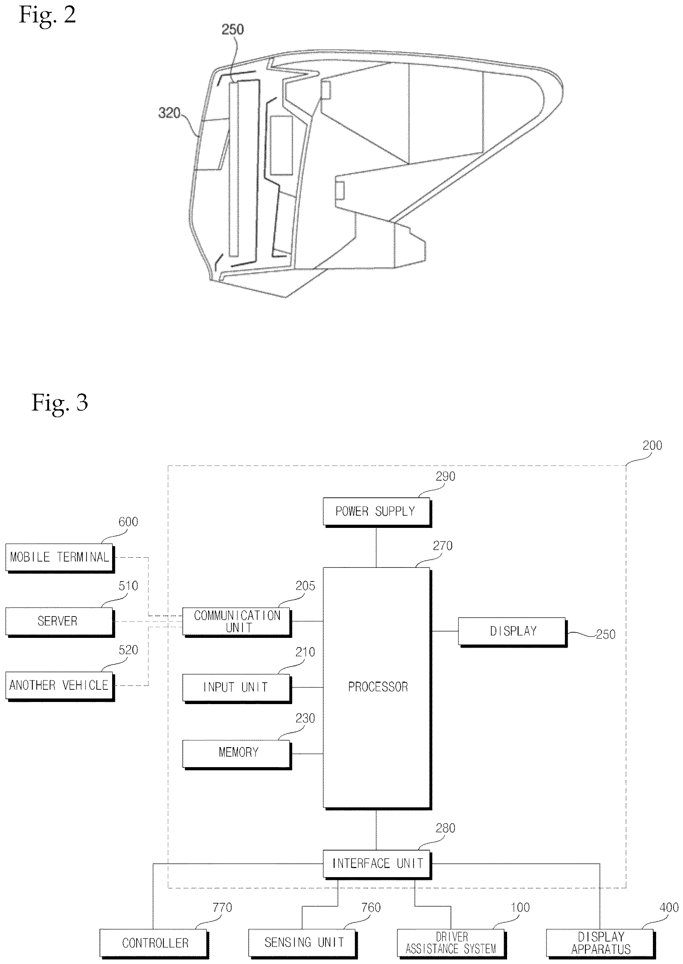

FIG. 2 is a diagram illustrating an example rear combination lamp, taken along line A-A in FIG. 1B.

Referring to FIG. 2, the rear combination lamp may include a display 250.

The display 250 may include a plurality of light emitting devices. The display 250 may display various images in respective areas according to the control operation of a processor 270 (see FIG. 3). The display 250 may be divided into a plurality of areas, such that images corresponding to a stop lamp, a taillight, a turn signal lamp, a fog light, a sidelight and a reverse light are displayed in the respective areas.

Meanwhile, a lens 320 may be formed at the rear end of the display 250. The lens 320 may cause light generated in the display 250 to be refracted or transmitted therethrough.

An amplification unit (e.g., a light amplifier) for amplifying the light generated in the display 250 may be further provided.

FIG. 3 is a diagram illustrating an example rear combination lamp.

Referring to FIG. 3, the rear combination lamp 200 for vehicles may include a communication unit 205, an input unit 210, a memory 230, a display 250, a processor 270, an interface unit 280, and a power supply 290.

The communication unit 205 may include at least one communication module enabling wireless communication with an external device. The communication unit 205 may also include a communication module for connecting the rear combination lamp 200 to at least one network. The communication unit 205 may exchange data with the external device. For example, the external device may be a mobile terminal 600, an external server 510, or another vehicle 520.

The communication unit 205 is configured to receive exterior style data of the rear combination lamp from the external device. For example, the exterior style data may be image data provided to enable exterior styling of the rear combination lamp.

The input unit 210 may include an input device capable of receiving user input for controlling operation of the rear combination lamp 200. The input unit 210 may be disposed in the vehicle 700. The input unit 210 may include a touch input device or a mechanical input device. The input unit 210 is configured to receive user inputs for controlling various operations of the rear combination lamp 200.

The input unit 210 is configured to receive a user input for generating exterior style data of the rear combination lamp. For example, the exterior style data may be image data provided to allow implementation of exterior styling of the rear combination lamp.

The memory 230 may store basic data for each unit of the rear combination lamp 200, control data for controlling operation of each unit, and data input to and output from the rear combination lamp 200.

When implemented through hardware, the memory 230 may include various storage devices such as a ROM, RAM, EPROM, flash drive, and hard drive.

The memory 230 may store various kinds of data for overall operation of the rear combination lamp 200 including a program for processing or controlling operation of the processor 270.

The memory 230 may include at least one exterior style datum. For example, the exterior style data may be image data provided to allow implementation of exterior styling of the rear combination lamp. In some implementations, the processor 270 is configured to control the display 250 based on the exterior style data stored in the memory 230, thereby performing exterior styling of the rear combination lamp.

The memory 230 may store exterior style data applied as the default. The memory 230 may store exterior style data applied as the default when the vehicle 700 is released from the factory. The memory 230 may store a plurality of exterior style data. One of the exterior style data stored in the memory 230 may be selected and applied according to user input. In other words, the processor 270 may perform a control operation such that the exterior style datum selected from among the plurality of exterior style data stored in the memory 230 is displayed on the display 250.

The display 250 may be disposed on the rear side of the vehicle 700. The display 250 may include a plurality of light emitting devices.

The display 250 may include one of a liquid crystal display (LCD), a plasma display panel (PDP), an electroluminescence display (ELD), an organic light-emitting diode (OLED), a light-emitting diode (LED), a field emission display (FED), a vacuum fluorescent display (VFD) and an electrophoretic display (EPD). Preferably, the display 250 may be an OLED display.

The display 250 may operate based on a control signal received from the processor 270.

Predetermined content may be displayed in one area of the display 250. For example, the content may be configuration of the rear combination lamp. Specifically, the display 250 may be divided into a plurality of areas. An image corresponding to a stop lamp, taillight, turn signal lamp, fog light, sidelight or reverse light may be formed in at least one divided area of the display 250. In addition, the function of the stop lamp, taillight, turn signal lamp, fog light, sidelight or reverse light may be performed by emission of light from light emitting devices corresponding to the respective areas.

The display 250 may be a transparent display.

The display 250 may form a rear window glass 705 of the vehicle 700.

The display 250 may include a first display unit and a second display unit. The first display unit may be adapted to face outward of the vehicle 700. The second display unit may be adapted to face inward of the vehicle 700. The first display unit may display an image for implementing exterior styling of the rear combination lamp. The second display unit may display content to be provided to the user.

The display 250 is controlled by the processor 270.

The processor 270 is configured to control overall operation of each unit in the rear combination lamp 200.

The processor 270 may implement exterior styling of the rear combination lamp using light generated by the plurality of light emitting devices included in the display 250. The processor 270 is configured to control the display 250 to enable exterior styling.

The processor 270 may receive condition related to driving of the vehicle. The condition may include at least one of forward objects information, rearward objects information, navigation information, road information, vehicle condition information, vehicle driving information, in-vehicle situation information and driving environment information.

The processor 270 may determine at least one condition related to driving of the vehicle on which the display is disposed.

The processor 270 may select, from among multiple exterior style images, at least one exterior style image to display based on the determined at least one condition related to driving of the vehicle.

The processor 270 may control the display to display the at least one exterior style image selected.

The processor 270 is configured to control the display 250 such that the image of the rear combination lamp is displayed on the display 250. The processor 270 may divide the display 250 into a plurality of areas.

The processor 270 may perform a control operation such that a plurality of an image corresponding to a stop lamp, taillight, turn signal lamp, fog light, sidelight or reverse light is displayed in the plurality of divided areas of the display 250.

The processor 270 may perform a control operation such that the rear combination lamp image displayed on the display 250 performs the function of the rear combination lamp.

For example, when the brakes are put on the vehicle 700, an image corresponding to the stop lamp in the rear combination lamp image may be controlled to be displayed and to function as the stop lamp.

For example, when sensed illuminance information is received and the sensed illuminance is less than or equal to a reference value, the processor 270 is configured to control an image corresponding to the taillight in the rear combination lamp image to be displayed and to function as the taillight.

For example, when a turn signal is received, the processor 270 is configured to control an image corresponding to the turn signal lamp in the rear combination lamp image to be displayed in a flickering manner and function as the turn signal lamp.

For example, when fog information about a road on which the vehicle is traveling is received, the processor 270 is configured to control an image corresponding to the fog light in the rear combination lamp image to be displayed and function as the fog light. For example, the fog information may be detected by the driver assistance system 100. Alternatively, the fog information may be received through a communication unit 710 of the vehicle.

For example, the processor 270 is configured to control an image corresponding to the sidelight in the rear combination lamp image to be displayed and function as the sidelight.

For example, when gear shift information corresponding to the backup state is received, the processor 270 is configured to control an image corresponding to the reverse light in the rear combination lamp image and function as the reverse light.

The processor 270 may set the maximum and minimum values of the intensity of light output from the display 250. The processor 270 is configured to control a plurality of light emitting devices included in the display 250 such that light whose intensity is between the maximum and minimum values is output.

The processor 270 may adjust the intensity of light output from the display 250 according to the driving situation or driving environment. The processor 270 is configured to receive information about the driving situation or driving environment through the interface unit 280.

The processor 270 is configured to control the display 250 such that the intensity of light output from the display 250 in the daytime is higher than the intensity of light output from the display 250 at night. For example, determining whether it is daytime or night may be based on illuminance information sensed through an illuminance sensor.

The processor 270 is configured to control the display 250 such that intensity of light output from the display in accordance with the weather information is adjusted. In this case, the processor 270 is configured to receive the weather information through the interface unit 280. The weather information may be detected by the driver assistance system 100. Alternatively, the weather information may be received through the communication unit 710 of the vehicle.

The processor 270 may adjust the intensity of output light of the display 250 according to the illuminance information received through the interface unit 280.

The processor 270 is configured to receive distance-from-following vehicle information through the interface unit 280. For example, the distance-from-following vehicle information may be detected by the driver assistance system 100.

The processor 270 may adjust the intensity of light generated by the plurality of light emitting devices included in the display 250, based on the distance-from-following vehicle information. For example, the processor 270 may adjust the intensity of light in proportion to a distance between the vehicle 700 and a following vehicle. For example, the processor 270 may cause the intensity of light to decrease as the distance between the vehicle 700 and the following vehicle decreases. For example, the processor 270 may cause the intensity of light to increase as the distance between the vehicle 700 and the following vehicle increases.

The processor 270 is configured to control the pattern of generated light by turning on/off the plurality of light emitting devices included in the display 250 based on the distance-from-following vehicle information. For example, the processor 270 is configured to control the number of light emitting devices which are turned on such that the number increases in proportion to the distance between the vehicle 700 and the following vehicle. For example, the processor 270 is configured to control the number of light emitting devices which are turned off such that the number increase in proportion to the distance between the vehicle 700 and the following vehicle.

The processor 270 is configured to control the display 250 to implement exterior styling based on the exterior style data stored in the memory 230.

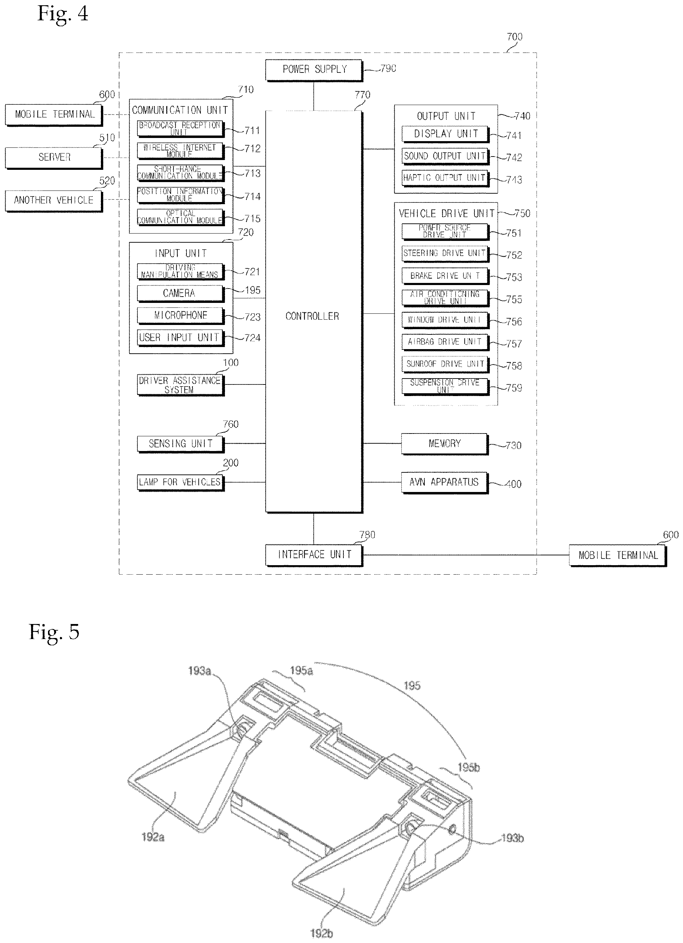

The processor 270 is configured to control the display 250 such that exterior styling is performed based on the user's facial expression sensed through an internal camera 195c (see FIG. 4). For example, if a smiling expression of the user is sensed through the internal camera 195c (see FIG. 4), the user facial expression information may be delivered to the processor 270 through the interface unit 280. The processor 270 is configured to control the display 250 such that exterior styling corresponding to the smiling expression information is performed.

The processor 270 determine the at least one condition related to driving of the vehicle by determining the sensed user facial expression information.

The processor 270 select, from among multiple exterior style images, the at least one exterior style image to display by selecting, from among multiple exterior style images, at least one exterior style image to display based on the sensed user facial expression information.

The processor 270 is configured to receive exterior style data through the interface unit 280. For example, the exterior style data may be image data provided such that exterior styling of the rear combination lamp is performed.

The processor 270 is configured to control the display 250 such that exterior styling is performed based on the received exterior style data.

The exterior style data received through the interface unit 280 may be data received from an external device 600, 510 or 520 by payment of a fee for use of the exterior style data or for free. For example, the external device may be a mobile terminal 600, an external server 510 or another vehicle 520.

The exterior style data received through the interface unit 280 may be data generated according to a user input. The user input may be received through a user input unit 720 or display apparatus 400 of the vehicle.

The exterior style data received through the interface unit 280 may be data generated from an image of another vehicle acquired from a camera 195. For example, the camera 195 may include a mono camera, stereo cameras 195a and 195b, or around view cameras 195d, 195e, 195f and 195g included in the driver assistance system 100. For example, the camera 195 may acquire a vehicle front view image or a vehicle surroundings image. The camera 195 is configured to detect another vehicle in the vehicle front view image or a vehicle surroundings image.

The processor 270 is configured to receive location information about a road on which the vehicle is traveling, through the interface unit 280. The processor 270 is configured to control the display 250 such that exterior styling is performed in consideration of traffic laws applied to the road.

The processor 270 may determine the at least one condition related to driving of the vehicle by determining traffic laws applied to the road.

The processor 270 may select, from among multiple exterior style images, the at least one exterior style image to display by selecting, from among multiple exterior style images, at least one exterior style image to display based on the traffic laws applied to the road.

As described above, the processor 270 is configured to control the display 250 such that an image corresponding to a stop lamp, taillight, turn signal lamp, fog light, sidelight or reverse light is formed in at least one area of the display 250. In some implementations, the processor 270 is configured to control the display 250 to implement exterior styling such that the size, disposition, light intensity or color of each area for displaying an image of the stop lamp, taillight, turn signal lamp, fog light, sidelight or reverse light complies with the traffic laws.

In the case where the display 250 defines the rear window glass 705 of the vehicle, the processor 270 is configured to control the display 250 such that images corresponding to the stop lamp, taillight, turn signal lamp, fog light, sidelight or reverse light are displayed in at least one area of the display 250. In some implementations, the images corresponding to the stop lamp may include an image corresponding to a center high mounted stop lamp (CHMSL).

In the case where the display 250 defines the rear window glass 705 of the vehicle, the processor 270 may display the image of the rear combination lamp for exterior styling on the first display unit of the display 250. The processor 270 is configured to control the second display unit of the display 250 to display predetermined content for a user positioned inside the vehicle 700.

The processor 270 is configured to receive, through the interface unit 280, forward objects information, rearward objects information, navigation information, road information, vehicle condition information, vehicle driving information, in-vehicle situation information or driving environment information.

The processor 270 is configured to control the display 250 to display the received forward objects information, rearward objects information, navigation information, road information, vehicle condition information, vehicle driving information, in-vehicle situation information or driving environment information.

The forward objects information may include traffic sign recognition (TSR) information and speed bump detection information.

The processor 270 is configured to control the display 250 to display TSR information and speed bump detection information.

The TSR information may include detection information on a design or text indicated on a traffic signboard, detection information on a signal output from a traffic light, and detection information on a design or text indicated on a road surface.

The processor 270 is configured to control the display 250 to display information corresponding to a design or text indicated on a traffic signboard, a signal output from a traffic light, or a design or text indicated on a road surface.

The processor 270 is configured to control the display 250 to display a bump image corresponding to the speed bump detection information.

The forward objects information may include another-vehicle detection information, two-wheeled vehicle detection information, pedestrian detection information, traffic accident information, construction information or road congestion information. For example, another vehicle, a two-wheeled vehicle, a pedestrian, a traffic accident situation, construction or a road congestion situation may be called an obstacle.

The processor 270 is configured to control the display 250 to display the another-vehicle detection information, two-wheeled vehicle detection information, pedestrian detection information, traffic accident information, construction information, or road congestion information.

The rearward objects information may be information about another vehicle traveling behind the vehicle 700.

The navigation information may include driving route information, predetermined destination information, remaining distance information, driving area information, driving road information, and speed camera information.

The processor 270 is configured to control the display 250 to display the driving route information, predetermined destination information, remaining distance information, driving area information, driving road information or speed camera information.

The processor 270 may display driving route information through turn-by-turn (TBT) navigation. The processor 270 is configured to control the display 250 to display the driving route information with a straight arrow, a left turn arrow, a right turn arrow or a U-turn arrow.

The road information may include information about the inclination or curvature of the road on which the vehicle is traveling.

The processor 270 is configured to control the display 250 to display the inclination or curvature information.

The vehicle condition information may be On Board Diagnostics (OBD) information. The vehicle condition information may include parking brake state information, high beam on/off information, washer liquid level information, engine oil level information, power source temperature information, remaining energy information, tire pressure information, brake oil level information or door opening information.

The processor 270 is configured to control the display 250 to display the OBD information. The processor 270 is configured to control the display 250 to display the parking brake state information, high beam on/ off information, washer liquid level information, engine oil level information, power source temperature information, remaining energy information, tire pressure information, brake oil level information, or door opening information.

The vehicle driving information may include driving speed information, gear shift information or turn signal information delivered to the turn signal lamp.

The processor 270 is configured to control the display 250 to display the driving speed information, gear shift information or turn signal information.

Meanwhile, the processor 270 is configured to receive, through the interface unit 280, a user input that is input through the input unit 720 of the vehicle 700. In some implementations, the processor 270 is configured to control the display 250 to display information corresponding to the user input.

The in-vehicle situation information may be patient evacuation situation information, emergency aid request information, infant-on-board information or inexperienced driver information. For example, the in-vehicle situation information may be generated through the input unit 720 of the vehicle 700 according to user input.

The driving environment information may include weather information or time information.

The processor 270 is configured to control the display 250 to display the weather information or time information.

The processor 270 may be controlled by the controller 770.

The processor 270 may be implemented as hardware using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions.

The interface unit 280 may exchange date with the controller 770, sensing unit 760 or driver assistance system 100 of the vehicle 700.

The interface unit 280 is configured to receive vehicle-related data or user inputs or transmit, to the outside, a signal processed or generated by the processor 270. To this end, the interface unit 280 may perform data communication with the controller 770, the sensing unit 760, or the driver assistance system 100 provided in the vehicle in a wired or wireless manner.

The interface unit 280 is configured to receive sensor information from the controller 770 or the sensing unit 760.

For example, the sensor information may include at least one of vehicle direction information, vehicle location information (GPS information), vehicle orientation information, vehicle speed information, vehicle acceleration information, vehicle inclination information, vehicle drive/reverse information, battery information, fuel information, tire information, vehicular lamp information, interior temperature information, interior humidity information, and exterior illuminance information.

Such sensor information may be acquired from a heading sensor, a yaw sensor, a gyro sensor, a position module, a vehicle drive/reverse sensor, a wheel sensor, a vehicle speed sensor, a vehicle body tilt sensor, a battery sensor, a fuel sensor, a tire sensor, a steering sensor based on turning of the steering wheel, an interior temperature sensor, an interior humidity sensor, and an illuminance sensor. The position module may include a GPS module for receiving GPS information.

Among the pieces of sensor information, the vehicle direction information, vehicle location information, vehicle orientation information, vehicle speed information and vehicle inclination information, which are related to traveling of the vehicle, may be called vehicle travel information.

The interface unit 280 is configured to receive user facial expression information acquired by the internal camera 195c (see FIG. 4).

The interface unit 280 is configured to receive user's emotion information. For example, the emotion information may be generated based on the information input through the input unit 720 of the vehicle 700. For example, the emotion information may be generated by analyzing the user's facial expression or voice input through the internal camera 195c or a microphone 723.

Meanwhile, the interface unit 280 is configured to receive, from the controller 770 or the driver assistance system 100, object information detected by the driver assistance system 100.

The driver assistance system 100 may perform lane detection (LD), vehicle detection (VD), pedestrian detection (PD), bright spot detection (BD), traffic sign recognition (TSR), and road surface detection, based on an acquired front view image of the vehicle 700. The driver assistance system 100 may generate information about a distance to a detected object.

The interface unit 280 is configured to receive the detected object information from the driver assistance system 100. Alternatively, the interface unit 280 is configured to receive the detected object information via the controller 770.

The interface unit 280 is configured to receive forward objects information, rearward objects information, navigation information, road information, vehicle condition information, vehicle driving information, in-vehicle situation information or driving environment information. The interface unit 280 is configured to receive information about a distance to an object in front of or behind the vehicle.

The interface unit 280 is configured to receive a user input that is input through the input unit 720 of the vehicle 700.

The interface unit 280 is configured to receive exterior style data. For example, the exterior style data may be image data provided to enable implementation of exterior styling of the rear combination lamp. The exterior style data may be received from an external device 600, 510 or 520 (see FIG. 4) by payment or for free. For example, the external device may be a mobile terminal 600, a server 510, or another vehicle 520. Additionally, exterior style data may be generated by user input. Alternatively, the exterior style data may be generated from an image of another vehicle detected by the camera 195 for photographing the outside of the vehicle 700.

The interface unit 280 is configured to receive navigation information through data communication with the controller 770, the display apparatus 400 or a separate navigation device. For example, the navigation information may include predetermined destination information, route information according to the destination, map information, and current location information, wherein the map information and the current location information are related to traveling of the vehicle. The navigation information may include information about the location of the vehicle on the road.

The driver assistance system 100 will be described in more detail with reference to FIGS. 5 to 7C.

The power supply 290 may be controlled by the processor 270 to supply electric power necessary for operation of each unit of the rear combination lamp 200. In particular, the power supply 290 is configured to receive power from, for example, a battery in the vehicle 700.

FIG. 4 is a diagram illustrating an example vehicle.

Referring to FIG. 4, the vehicle 700 may include a communication unit 710, an input unit 720, a sensing unit 760, an output unit 740, a vehicle drive unit 750, a memory 730, an interface unit 780, a controller 770, a power supply 790, a driver assistance system 100, a rear combination lamp 200 and a display apparatus 400.

The communication unit 710 may include at least one module enabling wireless communication between the vehicle 700 and the mobile terminal 600, between the vehicle 700 and the external server 510 or between the vehicle 700 and another vehicle 520. The communication unit 710 may also include at least one module for connecting the vehicle 700 to at least one network.

The communication unit 710 is configured to receive exterior style data from an external device 600, 510 or 520 by communicating with the external device. The communication unit 710 may provide the received exterior style data to the rear combination lamp 200.

The communication unit 710 is configured to receive the exterior style data from the external device 600, 510 or 520 by payment or for free.

If the exterior style data is received from the external device 600, 510 or 520 by payment, the communication unit 710 may exchange payment information with the external devices 600, 510 and 520.

If the external device is the mobile terminal 600, the communication unit 710 is configured to receive the exterior style data through a short-range communication module 713.

If the external device is the server 510 or another vehicle 520, the communication unit 710 is configured to receive the exterior style data through a wireless Internet module 712.

The communication unit 710 is configured to receive traffic accident information, construction information or road congestion information from the external devices 600, 510 and 520. For example, the communication unit 710 is configured to receive traffic accident information, construction information or road congestion information through the wireless Internet module 712.

The communication unit 710 may include a broadcast reception module 711, the wireless Internet module 712, the short-range communication module 713, the location information module 714 and an optical communication module 715.

The broadcast reception module 711 receives a broadcast signal or broadcast-related information from an external broadcast management server over a broadcast channel. For example, the broadcast includes radio broadcast or TV broadcast.

The wireless Internet module 712, which refers to a module for wireless Internet access, may be internally or externally installed on the vehicle 700. The wireless Internet module 712 is configured to transmit and receive a radio signal on a communication network according to wireless Internet technologies.

Examples of wireless Internet technologies include Wireless LAN (WLAN), Wi-Fi, Wi-Fi Direct, Digital Living Network Alliance (DLNA), Wireless Broadband (WiBro), World Interoperability for Microwave Access (WiMAX), High Speed Downlink Packet Access (HSDPA), High Speed Uplink Packet Access (HSUPA), Long Term Evolution (LTE), and Long Term Evolution-Advanced (LTE-A). The wireless Internet module 712 transmits and receives data according to at least one wireless Internet technology selected from among wireless Internet technologies including the aforementioned technologies. For example, the wireless Internet module 712 may wirelessly exchange data with the external server 510. The wireless Internet module 712 is configured to receive weather information and traffic situation information (e.g., TPEG (Transport Protocol Expert Group)) from the external server 510.

The short-range communication module 713, which is intended for short-range communication, may support short-range communication using at least one of Bluetooth™, Radio Frequency Identification (RFID), Infrared Data Association (IrDA), Ultra Wideband (UWB), ZigBee, Near Field Communication (NFC), Wi-Fi, Wi-Fi Direct, and Wireless Universal Serial Bus (Wireless USB) technologies.

The short-range communication module 713 may establish a wireless local area network to implement short-range communication between the vehicle 700 and at least one external device. For example, the short-range communication module 713 may wirelessly exchange data with the mobile terminal 600. The short-range communication module 713 is configured to receive weather information, and traffic situation information (e.g., TPEG (Transport Protocol Expert Group)) from the mobile terminal 600. For example, when a user enters the vehicle 700, the mobile terminal 600 of the user may be paired with the vehicle 700 automatically or by execution of an application by the user.

A typical example of the location information module 714, which serves to acquire the location of the vehicle 700, is a global positioning system (GPS) module. For example, if the vehicle utilizes the GPS module, the location of the vehicle may be acquired using a signal from a GPS satellite.

The optical communication module 715 may include a light transmitter and a light receiver.

The light receiver may covert a light signal to an electrical signal to receiver information. The light receiver may include a photodiode (PD) for receiving light. The PD is capable of converting light into an electrical signal. For example, the light receiver is configured to receive information on a foregoing vehicle through light emitted from a light source included in the foregoing vehicle.

The light transmitter may include at least one light emitting device for converting an electrical signal to a light signal. Preferably, the light emitting device is a light emitting diode (LED). The light transmitter coverts an electrical signal into a light signal and transmits the light signal outside. For example, the light transmitter transmits a light signal by blinking a light emitting device at a predetermined frequency. In some implementations, the light transmitter may include an array of a plurality of light emitting devices. In some implementations, the light transmitter may be integrated with a lamp provided to the vehicle 700. For example, the light transmitter may be at least one of a headlight, a taillight, a stop lamp, a turn signal lamp and a sidelight. For example, the optical communication module 715 may exchange data with another vehicle 520 through optical communication.

The input unit 720 may include a driving manipulation device 721, a camera 195, a microphone 723 and a user input unit 724.

The driving manipulation device 721 receives user input for driving the vehicle 700. The driving manipulation device 721 may include a steering input device 721a, a shift input device 721b, an acceleration input device 721c, and a brake input device 721d.

The steering input device 721a receives a travel direction input of the vehicle 700 from the user. The steering input device 721a is preferably formed in the shape of a wheel such that steering can be input by a turning operation. In some implementations, the steering input device 721a may be defined in the form of a touchscreen, touch pad, or button.

The shift input device 721b receives, from the user, inputs of Park (P), Drive (D), Neutral (N) and Reverse (R) of the vehicle 700. Preferably, the shift input device 721b is formed in the shape of a lever. In some implementations, the shift input device 721b may be defined in the form of a touchscreen, touch pad, or button.

The acceleration input device 721c receives an input for accelerating the vehicle 700 from the user. The brake input device 721d receives an input for decelerating the vehicle 700 from the user. Preferably, the acceleration input device 721c and the brake input device 721d are formed in the shape of a pedal. In some implementations, the acceleration input device 721c or the brake input device 721d may be defined in the form of a touchscreen, touch pad, or button.

The camera 195 may include an image sensor and an image processing module. The camera 195 may process a still image or a moving image obtained by the image sensor (e.g., CMOS or CCD). The image processing module may process the still image or moving image acquired through the image sensor to extract necessary information and deliver the extracted information to the controller 770. Meanwhile, the vehicle 700 may include a camera 195 for capturing an image of a front view or surroundings of the vehicle and an internal camera 195c for capturing an image of the inside of the vehicle.

The internal camera 195c may acquire an image of a person on board. The internal camera 195c may obtain an image for biometric identification of the person.

While FIG. 4 illustrates the camera 195 as being included in the input unit 720, the camera 195 may be included in the driver assistance system 100.

The microphone 723 may process an external sound signal to create electrical data. The data created through the processing may be utilized for various purposes according to a function in execution in the vehicle 700. The microphone 723 may convert a voice command from the user into electrical data. The electrical data may be delivered to the controller 770.

In some implementations, the camera 722 or the microphone 723 may be included in the sensing unit 760 rather than in the input unit 720.

The user input unit 724 is intended to receive information input by the user. When information is input through the user input unit 724, the controller 770 is configured to control operation of the vehicle 700 in accordance with the input information. The user input unit 724 may include a touch input device or a mechanical input device. In some implementations the user input unit 724 may be disposed in one area of the steering wheel. In some implementations, the driver may manipulate the user input unit 724 with fingers while holding the steering wheel.

The sensing unit 760 senses a signal related to traveling of the vehicle 700. To this end, the sensing unit 760 may include a collision sensor, a wheel sensor, a speed sensor, a tilt sensor, a weight sensor, a heading sensor, a yaw sensor, a gyro sensor, a position module, a vehicle drive/reverse sensor, a battery sensor, a fuel sensor, a tire sensor, a steering sensor based on turning of the steering wheel, an interior temperature sensor, an interior humidity sensor, an ultrasonic sensor, radar, lidar, and an illuminance sensor.

Thereby, the sensing unit 760 may acquire vehicle collision information, vehicle direction information, vehicle location information (GPS information), vehicle orientation information, vehicle speed information, vehicle acceleration information, vehicle inclination information, vehicle drive/reverse information, battery information, fuel information, tire information, vehicular lamp information, interior temperature information, interior humidity information, a sensing signal for an angle by which the steering wheel is rotated, and illuminance information on the exterior of the vehicle.

The sensing unit 760 may further include an accelerator pedal sensor, a pressure sensor, an engine speed sensor, an air flow sensor (AFS), an intake air temperature sensor (ATS), a water temperature sensor (WTS), a throttle position sensor (TPS), a TDC sensor, and a crankshaft angle sensor (CAS).

The sensing unit 760 may include a biometric identification information sensing unit. The biometric identification information sensing unit senses and acquires biometric identification information of a passenger. The biometric identification information may include fingerprint information, iris-scan information, retina-scan information, hand geometry information, facial recognition information, and voice recognition information. The biometric identification information sensing unit may include a sensor for sensing biometric identification information of a passenger. For example, the internal camera 195c and the microphone 723 may operate as sensors. The biometric identification information sensing unit may acquire hand geometry information and facial recognition information through the internal camera 195c.

The output unit 740, which serves to output information processed by the controller 770, may include a display unit 741, a sound output unit 742 and a haptic output unit 743.

The display unit 741 may display information processed by the controller 770. For example, the display unit 741 may display vehicle-related information. For example, the vehicle-related information may include vehicle control information for direction control of the vehicle or vehicle driving assistance information for assisting the driver in driving. The vehicle-related information may also include vehicle condition information indicating the current condition of the vehicle or vehicle driving information related to driving of the vehicle.

The display unit 741 may include at least one of a liquid crystal display (LCD), a thin film transistor-liquid crystal display (TFT LCD), an organic light-emitting diode (OLED), a flexible display, a 3D display, and an e-ink display.

The display unit 741 may form a layered architecture together with a touch sensor or be integrated with the touch sensor, thereby implementing a touchscreen. Such touchscreen may function as the user input unit 724 providing an input interface between the vehicle 700 and the user and also as an output interface between the vehicle 700 and the user. In some implementations, the display unit 741 may include a touch sensor for sensing a touch applied to the display unit 741 in order to receive a control command in a touch manner. Thereby, when the display unit 741 is touched, the touch sensor may sense the touch, and the controller 770 may generate a control command corresponding to the touch. Content input through touch may include characters, numbers, or menu items which can be indicated or designated in various modes.

Meanwhile, the display unit 741 may include a cluster to allow a driver to check the vehicle condition information or vehicle driving information while driving the engine. The cluster may be positioned on the dashboard. In some implementations, the driver can check the information displayed on the cluster while looking forward of the vehicle.

In some implementations, the display unit 741 may be implemented as a head up display (HUD). If the display unit 741 is implemented as the HUD, information may be output through a transparent display provided to the windshield. Alternatively, the display unit 741 may be provided with a projection module, thereby, outputting information through an image projected on the windshield.

Meanwhile, a display unit 141 may be integrated with the display apparatus 400, which will be described later.

The sound output unit 742 converts an electrical signal from the controller 770 into an audio signal and outputs the audio signal. To this end, the sound output unit 742 may be provided with a speaker. The sound output unit 742 may output a sound corresponding to an operation of the user input unit 724.

The haptic output unit 743 generates a haptic output. For example, the haptic output unit 743 may vibrate the steering wheel, a seat belt and a seat to allow the user to recognize the output.

The vehicle drive unit 750 is configured to control operation of various vehicular devices. The vehicle drive unit 750 may include a power source drive unit 751, a steering drive unit 752, a brake drive unit 753, a lamp drive unit 754, an air conditioning drive unit 755, a window drive unit 756, an airbag drive unit 757, a sunroof drive unit 758 and a suspension drive unit 759.

The power source drive unit 751 may perform electronic control of the power source in the vehicle 700.

For example, if a fossil fuel-based engine is the power source, the power source drive unit 751 may perform electric control on the engine. Thereby, the output torque of the engine may be controlled. If the power source drive unit 751 is an engine, the output torque of the engine may be controlled by the controller 770 to limit the speed of the vehicle.

As another example, if an electricity-based motor is the power source, the power source drive unit 751 may perform control operation on the motor. Thereby, the rotational speed and torque of the motor may be controlled.

The steering drive unit 752 may perform electronic control of the steering apparatus in the vehicle 700. Thereby, the travel direction of the vehicle may be changed.

The brake drive unit 753 may perform electronic control of a brake apparatus in the vehicle 700. For example, by controlling the operation of the brakes disposed on the wheels, the speed of the vehicle 700 may be reduced. In another example, the brake disposed on a left wheel may be operated differently from the brake disposed on a right wheel in order to adjust the travel direction of the vehicle 700 to the left or right.

The air conditioning drive unit 755 may perform electronic control of an air conditioner in the vehicle 700. For example, if the temperature of the inside of the vehicle is high, the air conditioning drive unit 755 is configured to control the air conditioner to supply cool air to the inside of the vehicle.

The window drive unit 756 may perform electronic control of a window apparatus in the vehicle 700. For example, the unit is configured to control opening or closing of the left and right windows on both sides of the vehicle.

The airbag drive unit 757 may perform electronic control of an airbag apparatus in the vehicle 700. For example, the unit is configured to control the airbag apparatus such that the airbags are inflated when the vehicle is exposed to danger.

The sunroof drive unit 758 may perform electronic control of a sunroof apparatus in the vehicle 700. For example, the unit is configured to control opening or closing of the sunroof.

The suspension drive unit 759 may perform electronic control of a suspension apparatus in the vehicle 700. For example, when a road surface is uneven, the unit is configured to control the suspension apparatus to attenuate vibration of the vehicle 700.

The memory 730 is electrically connected to the controller 770. The memory 730 may store basic data for each unit, control data for controlling operation of each unit, and input/output data. When implemented through hardware, the memory 730 may include various storage devices such as a ROM, RAM, EPROM, flash drive, and hard drive. The memory 730 may store various kinds of data for overall operation of the vehicle 700 including a program for processing or controlling operation of the controller 770.

The interface unit 780 may serve as a path between the vehicle 700 and various kinds of external devices connected thereto. For example, the interface unit 780 may be provided with a port connectable to the mobile terminal 600, and thus be connected to the mobile terminal 600 through the port. In some implementations, the interface unit 780 may exchange data with the mobile terminal 600.

The interface unit 780 may also serve as a path through which electric energy is supplied to the mobile terminal 600 connected thereto. If the mobile terminal 600 is electrically connected to the interface unit 780, the interface unit 780 is controlled by the controller 770 to provide the mobile terminal 600 with electric energy supplied from the power supply 790.

The controller 770 is configured to control overall operations of the respective units in the vehicle 700. The controller 770 may be called an electronic control unit (ECU).

The controller 770 may be implemented as hardware using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions.

The power supply 790 may be controlled by the controller 770 to supply electric power necessary for operation of respective constituents. In particular, the power supply 790 is configured to receive power from, for example, a battery in the vehicle.

The driver assistance system 100 may exchange data with the controller 770. A signal or data from the driver assistance system 100 may be output to the controller 770. Alternatively, a signal or data from the driver assistance system 100 may be output to the rear combination lamp 200.

The rear combination lamp 200 may be the rear combination lamp for vehicles described above with reference to FIGS. 1 to 3.

The display apparatus 400 may exchange data with the controller 770. A signal or data from the display apparatus 400 may be output to the controller 770. Alternatively, a signal or data from the display apparatus 400 may be output to the rear combination lamp 200.

The display apparatus 400 may be integrated with the user input unit 724 and the display unit 741 described above. In some implementations, the display apparatus 400 is configured to receive user input according to a touch gesture. In addition, the display apparatus 400 may display predetermined content.

The display apparatus 400 may display a plurality of exterior style images. The display apparatus 400 is configured to receive user input of selecting one of the displayed exterior style images. In some implementations, the exterior style data include exterior style images. The exterior style data may be image data provided to enable implementation of exterior styling of the rear combination lamp. In some implementations, the processor 270 of the rear combination lamp 200 for vehicles is configured to control the display 250 to perform the exterior styling based on the selected exterior style image.

The exterior style data may be data received from an external device 600, 510 or 520 by payment or for free. For example, the external device may be a mobile terminal 600, an external server 510 or another vehicle 520.

The exterior style data may be data generated according to user input. The user input may be received through the user input unit 720 or display apparatus 400 of the vehicle.

The exterior style data may be data generated from an image of another vehicle acquired from the camera 195. For example, the camera 195 may include a mono camera, stereo cameras 195a and 195b, or around view cameras 195d, 195e, 195f and 195g as included in the driver assistance system 100.

The display apparatus 400 for vehicles may display at least one exterior style image generated by a user input. If the exterior style image is selected, the display apparatus 400 may provide exterior style data corresponding to the exterior style image to the rear combination lamp 200.

When a plurality of exterior style data is received from the external server 510, the display apparatus 400 may display a plurality of exterior style images. The display apparatus 400 is configured to receive user input of selecting one of the displayed exterior style images. In some implementations, the processor 270 of the rear combination lamp 200 is configured to control the display 250 such that exterior styling is performed according to the selected exterior style image.

When a plurality of exterior style data is received from the mobile terminal 600, the display apparatus 400 may display a plurality of exterior style images. The display apparatus 400 is configured to receive user input of selecting one of the displayed exterior style images. In some implementations, the processor 270 of the rear combination lamp 200 is configured to control the display 250 such that exterior styling is performed according to the selected exterior style image.

When a plurality of exterior style data is stored in the memory 230 of the rear combination lamp 200, the display apparatus 400 may display a plurality of exterior style images corresponding to the plurality of exterior style data. The display apparatus 400 is configured to receive user input of selecting one of the displayed exterior style images. In some implementations, the processor 270 of the rear combination lamp 200 is configured to control the display 250 such that exterior styling is performed according to the selected exterior style image.

Meanwhile, the display apparatus 400 may be controlled by the controller 770.

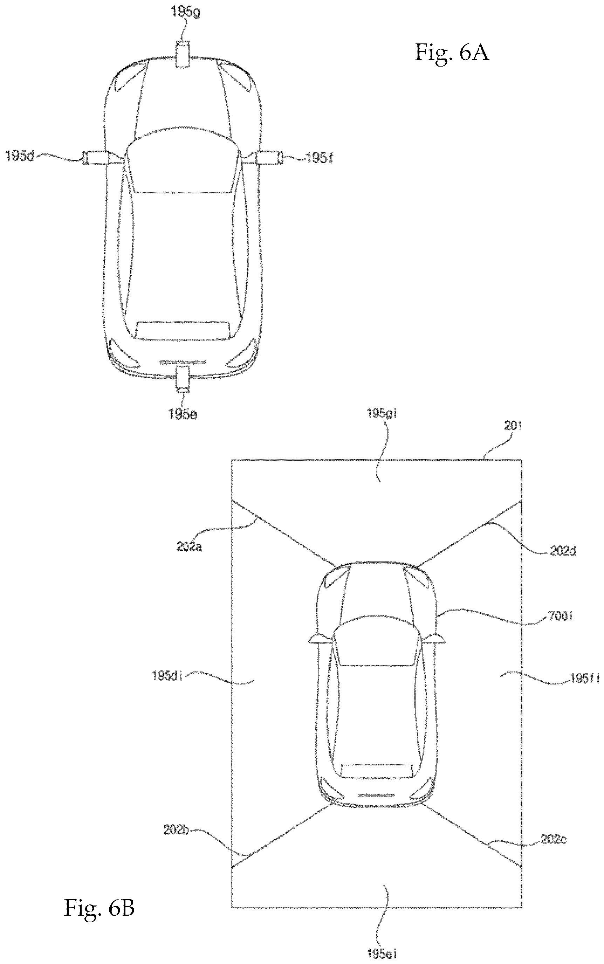

FIG. 5 is a diagram illustrating an example camera attached to the vehicle. FIG. 6A is a diagram illustrating an example camera attached to the vehicle. FIG. 6B is a diagram illustrating an example camera attached to the vehicle.

Hereinafter, description will be given of a driving assistance system including cameras 195a and 195b for acquiring an image of the front view of the vehicle, with reference to FIG. 5.

While the driver assistance system 100 is illustrated as including two cameras in FIG. 5, it is apparent that the number of cameras is not limited thereto.

Referring to FIG. 5, the driver assistance system 100 may include a first camera 195a provided with a first lens 193a and a second camera 195b provided with a second lens 193b. In some implementations, the camera 195 may be called a stereo camera.

The driver assistance system 100 may include a first light shield 192a and a second light shield 192b, which are intended to shield light incident on the first lens 193a and the second lens 193b, respectively.

The driver assistance system 100 shown in the figure may be detachably attached to the ceiling or windshield of the vehicle 700.

The driver assistance system 100 may acquire stereo images of the front view of the vehicle from the first and second cameras 195a and 195b, perform disparity detection based on the stereo images, perform object detection in at least one stereo image based on the disparity information, and continuously track movement of an object after the object detection.

Hereinafter, description will be given of a driving assistance system including cameras 195d, 195e, 195f and 195g for acquiring images of the surroundings of the vehicle with reference to FIGS. 6A and 6B.

While FIGS. 6A and 6B illustrate the driver assistance system 100 as including four cameras, it is apparent that the number of cameras is not limited thereto.

Referring to FIGS. 6A and 6B, the driver assistance system 100 may include a plurality of cameras 195d, 195e, 195f and 195g. In some implementations, the camera 195 may be called an around view camera.

The cameras 195d, 195e, 195f and 195g may be disposed at the left, back, right and front of the vehicle, respectively.

The left camera 195d may be disposed in a case surrounding the left side-view mirror. Alternatively, the left camera 195d may be disposed at the exterior of the case surrounding the left side-view mirror. Alternatively, the left camera 195d may be disposed in one outer area of the left front door, left rear door or left fender.

The right camera 195f may be disposed in a case surrounding the right side-view mirror. Alternatively, the right camera 195f may be disposed at the exterior of the case surrounding the right side-view mirror. Alternatively, the right camera 195f may be disposed at one outer area of the right front door, right rear door or right fender.

The rear camera 195e may be disposed near the rear license plate or trunk switch.

The front camera 195g may be disposed near the badge or radiator grille.

Images captured by the plurality of cameras 195d, 195e, 195f and 195g may be delivered to the processor 170, and the processor 170 may synthesize the images to generate an image of the surroundings of the vehicle.

FIG. 6B shows an exemplary image of the surroundings of the vehicle. A vehicle surroundings image 201 may include a first image area 195di of an image captured by the left camera 195d, a second image area 195ei of an image captured by the rear camera 195e, the third image area 195fi of an image captured by the right camera 195f, and the fourth image area of an image captured by the front camera 195g.

When an around view image is generated from the plurality of cameras, boundary parts may be produced among the respective image areas. The boundary parts may be processed through image blending to expression natural when they are displayed.

Meanwhile, boundary lines 202a, 202b, 202c, and 202d may be displayed on the respective boundaries of a plurality of images.

The vehicle surroundings image 201 may include a vehicle image 700i. For example, the vehicle image 700i may be generated by the processor 170.

The vehicle surroundings image 201 may be displayed through the display unit 741 of the vehicle or the display unit 180 of the driver assistance system.

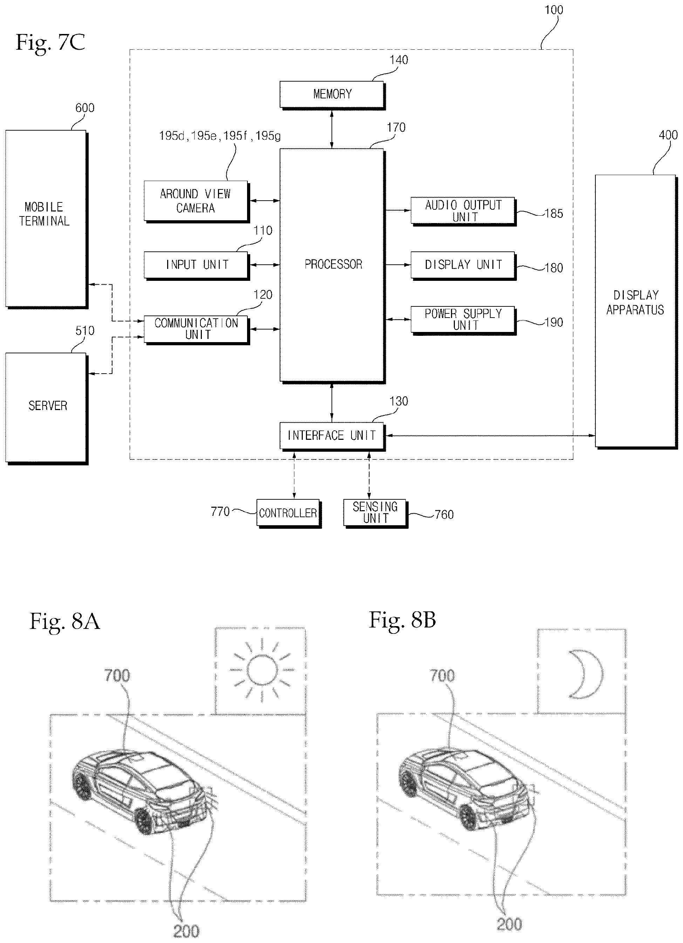

FIG. 7A is a diagram illustrating an example interior of a driver assistance system. FIG. 7B is a diagram illustrating an example interior of a driver assistance system. FIG. 7C is a diagram illustrating an example interior of a driver assistance system.

In FIGS. 7A and 7B, the driver assistance system 100 may generate vehicle-related information by performing signal processing of an image received from the camera 195 based on computer vision. For example, the vehicle-related information may include vehicle control information for direction control of the vehicle or vehicle driving assistance information for assisting the driver in driving.

For example, the camera 195 may be a mono camera for capturing images of the front view or rear view of the vehicle. Alternatively, the camera 195 may include stereo cameras 195a and 195b for capturing images of the front view or rear view of the vehicle. Alternatively, the camera 195 may include around view cameras 195d, 195e, 195f and 195g for capturing images of surroundings of the vehicle.

FIG. 7A is a block diagram illustrating the interior of the driver assistance system 100.

Referring to FIG. 7A, the driver assistance system 100 may include an input unit 110, a communication unit 120, an interface unit 130, a memory 140, a processor 170, a power supply 190, a camera 195, a display unit 180 and an audio output unit 185.

The input unit 110 may be equipped with a plurality of buttons or a touchscreen attached to the driver assistance system 100, in particular, the internal camera 195c. The driver assistance system 100 may be turned on and operated through the plurality of buttons or the touchscreen. Various input operations may also be performed through the buttons or touchscreen.

The communication unit 120 may wirelessly exchange data with the mobile terminal 600 or the server 500. In particular, the communication unit 120 may wirelessly exchange data with a mobile terminal of the vehicle driver. Wireless data communication schemes may include Bluetooth, Wi-Fi Direct, Wi-Fi, APiX, and NFC.

The communication unit 120 is configured to receive weather information and traffic situation information (e.g., TPEG (Transport Protocol Expert Group)) from the mobile terminal 600 or the server 500. The driver assistance system 100 may transmit recognized real-time information to the mobile terminal 600 or the server 500.

When a user enters the vehicle, the mobile terminal 600 of the user may be paired with the driver assistance system 100 automatically or by execution of an application by the user.

The communication unit 120 is configured to receive change-of-traffic light information from the external server 510. For example, the external server 510 may be a server positioned at a traffic control center that controls traffic.

The interface unit 130 is configured to receive vehicle-related data or transmit a signal processed or generated by the processor 170. To this end, the interface unit 130 may perform data communication with the controller 770, the display apparatus 400, the sensing unit 760 and the like which are included in the vehicle through wired or wireless communication.

The interface unit 130 is configured to receive navigation information through data communication with the controller 770, the display apparatus 400 or a separate navigation apparatus. For example, the navigation information may include predetermined destination information, route information according to the destination, map information, and current location information, wherein the map information and the current location information are related to traveling of the vehicle. The navigation information may include information about the location of the vehicle on the road.

Meanwhile, the interface unit 130 is configured to receive sensor information from the controller 770 or the sensing unit 760.

For example, the sensor information may include at least one of vehicle direction information, vehicle location information (GPS information), vehicle orientation information, vehicle speed information, vehicle acceleration information, vehicle inclination information, vehicle drive/reverse information, battery information, fuel information, tire information, vehicular lamp information, and interior temperature information, interior humidity information.

Such sensor information may be acquired from a heading sensor, a yaw sensor, a gyro sensor, a position module, a vehicle drive/reverse sensor, a wheel sensor, a vehicle speed sensor, a vehicle body tilt sensor, a battery sensor, a fuel sensor, a tire sensor, a steering sensor based on turning of the steering wheel, a interior temperature sensor, and a interior humidity sensor. The position module may include GPS module for receiving GPS information.

Among the pieces of sensor information, the vehicle direction information, vehicle location information, vehicle orientation information, vehicle speed information and vehicle inclination information, which are related to traveling of the vehicle, may be called vehicle travel information.

The memory 140 may store various kinds of data for overall operation of the driver assistance system 100 including a program for processing or controlling operation of the processor 170.

The memory 140 may store data for identifying an object. For example, if a predetermined object is detected in an image acquired through the camera 195, the memory 140 may store data for identifying the object according to a predetermined algorithm.

The memory 140 may store traffic information data. For example, if predetermined traffic information is detected in an image acquired through the camera 195, the memory 140 may store data for identifying the traffic information according to a predetermined algorithm.

When implemented through hardware, the memory 140 may include various storage devices such as a ROM, RAM, EPROM, flash drive, and hard drive.

The processor 170 is configured to control overall operation of each unit in the driver assistance system 100.

The processor 170 may process an image of the vehicle front view image or a vehicle surroundings image acquired by the camera 195. In particular, the processor 170 performs signal processing based on computer vision. Thereby, the processor 170 may acquire an image of the front view or surroundings of the vehicle from the camera 195, and is configured to detect and track an object based on the image. In particular, in detecting an object, the processor 170 may perform lane detection (LD), vehicle detection (VD), pedestrian detection (PD), bright spot detection (BD), traffic sign recognition (TSR), and road surface detection.

A traffic sign may represent predetermined information which can be delivered to the driver of the vehicle 700. The traffic sign may be delivered to the deriver through a traffic light, a traffic signboard or a road surface. For example, the traffic sign may be a Go or Stop signal output from a traffic light for a vehicle or pedestrian. For example, the traffic sign may include various designs or texts marked on traffic signboards. For example, the traffic sign may include various designs or texts marked on the road surface.

The processor 170 is configured to detect information in a vehicle front view image, vehicle rear view image or surroundings-of-vehicle image acquired by the camera 195.

The information may include forward objects information, rearward objects information, and road information.

The processor 170 may compare the detection information with information stored in the memory 140 to identify the information.

Meanwhile, the processor 170 is configured to control zoom of the camera 195. For example, the processor 170 is configured to control zoom of the camera 195 according to a result of the object detection. For example, if a traffic signboard is detected, but details marked on the traffic signboard are not detected, the processor 170 is configured to control the camera 195 such that the camera 195 zooms in.

The processor 170 is configured to receive weather information and traffic situation information (e.g., TPEG (Transport Protocol Expert Group)) through the communication unit 120.

The processor 170 may recognize, in real time, information about a traffic situation around the vehicle recognized by the driver assistance system 100 based on stereo images.

The processor 170 is configured to receive navigation information from the display apparatus 400 or a separate navigation apparatus through the interface unit 130.

The processor 170 is configured to receive sensor information from the controller 770 or the sensing unit 760 through the interface unit 130. For example, the sensor information may include at least one of vehicle direction information, vehicle location information (GPS information), vehicle orientation information, vehicle speed information, vehicle acceleration information, vehicle inclination information, vehicle drive/reverse information, battery information, fuel information, tire information, vehicular lamp information, interior temperature information, interior humidity information and steering wheel rotation information.

The processor 170 is configured to receive navigation information from the controller 770, the display apparatus 400, or a separate navigation apparatus through the interface unit 130.

The processor 170 is configured to detect a relative distance to an object based on change in size of the object detected in time. The processor 170 is configured to detect a relative speed of the detected object based on the detected relative distance and vehicle speed.

For example, if the camera 195 captures a front view image of the vehicle 700, the processor 170 is configured to detect a front object. The processor 170 is configured to detect a relative distance to the front object based on change in size of the front object detected in time. For example, the front object may be a foregoing vehicle.

For example, if the camera 195 captures a rear view image of the vehicle 700, the processor 170 is configured to detect a rear object. The processor 170 is configured to detect a relative distance to the rear object based on change in size of the rear object detected in time. For example, the rear object may be a following vehicle.

The processor 170 is configured to detect another vehicle in a vehicle front view image or surroundings-of-vehicle image. The processor 170 may generate exterior style data based on the rear combination lamp of the detected vehicle. The processor 170 may provide the exterior style data to the rear combination lamp 200.

In some implementations, the processor 170 may provide an image of the detected vehicle to the rear combination lamp 200. In some implementations, the processor 270 of the rear combination lamp 200 may generate exterior style data based on the received image of the vehicle.

Meanwhile, the processor 170 may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions.

The processor 170 may be controlled by the controller 770.

The display unit 180 may display various kinds of information processed by the processor 170. The display unit 180 may display an image related to operation of the driver assistance system 100. To display such image, the display unit 180 may include a cluster or HUD on the inner front of the vehicle. If the display unit 180 is an HUD, the unit may include a projection module for projecting an image onto the wind shied of the vehicle 700.

The audio output unit 185 may output sound based on an audio signal processed by the processor 170. To this end, the audio output unit 185 may include at least one speaker.

An audio input unit is configured to receive a user's voice. To this end, the unit may include a microphone. The received voice may be converted into an electrical signal and delivered to the processor 170.

The power supply 190 may be controlled by the processor 170 to supply electric power necessary for operation of respective constituents. In particular, the power supply 190 is configured to receive power from, for example, a battery in the vehicle.

The camera 195 acquires a vehicle front view image, a vehicle rear view image or a surroundings-of-vehicle image. The camera 195 may be a mono camera or stereo camera 195a, 195b for capturing the vehicle front view image or rear view image. Alternatively, the camera 195 may include a plurality of cameras 195d, 195e, 195f and 195g for capturing a surroundings-of-vehicle image.

The camera 195 may include an image sensor (e.g., CMOS or CCD) and an image processing module.

The camera 195 may process a still image or a moving image obtained by the image sensor. The image processing module may process the still image or moving image acquired through the image sensor. In some implementations, the image processing module may be configured separately from the processor 170 or integrated with the processor 170.

Zoom of the camera 195 may be controlled by the processor 170. For example, a zoom barrel included in the camera 195 may be moved as controlled by the processor 170, thereby setting the zoom.

The camera 195 may be controlled by the processor 170 to set the focus. For example, a focus barrel included in the camera 195 may be moved as controlled by the processor 170, thereby setting the focus. The focus may be automatically set based on the zoom setting.

Meanwhile, the processor 170 may automatically control the focus according to zoom control of the camera 195.

The camera 195 is configured to detect a front object or rear object of the vehicle.

FIG. 7B is a block diagram illustrating the interior of the driver assistance system 100.

Referring to FIG. 7B, the driver assistance system 100 of FIG. 7B differs from the driver assistance system 100 of FIG. 7A in that the system of FIG. 7B includes stereo cameras 195a and 195b. Hereinafter, description will be given focusing on this difference.

The driver assistance system 100 may include first and second cameras 195a and 195b. For example, the first and second cameras 195a and 195b may be called stereo cameras.

The stereo camera 195a and 195b may be detachably formed on the ceiling or windshield of the vehicle 700. The stereo camera 195a and 195b may include a first lens 193a and a second lens 193b.

The stereo camera 195a and 195b may include a first light shield 192a and a second light shield 192b, which are intended to shield light incident on the first lens 193a and the second lens 193b, respectively.

The first camera 195a acquires a first image of the front view of the vehicle. the second camera 195b acquires a second image of the front view of the vehicle. The second camera 195b is spaced a predetermined distance from the first camera 195a. As the first and second cameras 195a and 195b are spaced a predetermined distance from each other, a disparity therebetween is produced, and a distance to an object may be detected according to the disparity.

If the driver assistance system 100 includes the stereo cameras 195a and 195b, the processor 170 performs signal processing based on computer vision. Thereby, the processor 170 may acquire stereo images of the front view of the vehicle from the stereo cameras 195a and 195b, perform disparity calculation based on the stereo images, perform object detection in at least one of the stereo images based on the calculated disparity information, and continuously track movement of an object after object detection. For example, the stereo images are based on the first image received from the first camera 195a and the second image received from the second camera 195b.

In particular, in detecting an object, the processor 170 may perform lane detection (LD), vehicle detection (VD), pedestrian detection (PD), bright spot detection (BD), traffic sign recognition (TSR), and road surface detection.

In addition, the processor 170 may calculate the distance to a detected vehicle, the speed of the detected vehicle, and difference in speed from the detected vehicle.

The processor 170 is configured to control zoom of the first and second cameras 195a and 195b individually. The processor 170 may periodically change the zoom ratio of the second camera 195b, keeping the zoom ratio of the first camera 195a constant. The processor 170 may periodically change the zoom ratio of the first camera 195a, keeping the zoom ratio of the second camera 195b constant.

The processor 170 is configured to control the first or second camera 195a or 195b to zoom in or out with a predetermined periodicity.

The processor 170 may set a high zoom ratio of the first camera 195a to readily detect a distant object. The processor 170 may also set a low zoom ratio of the second camera 195b to readily detect a nearby object. The processor 170 is configured to control the first camera 195a and the second camera 195b such that the first camera 195a zooms in and the second camera 195b zooms out.

Alternatively, the processor 170 may set a low zoom ratio of the first camera 195a to readily detect a nearby object. The processor 170 may also set a high zoom ratio of the second camera 195b to readily detect a distant object. The processor 170 is configured to control the first camera 195a and the second camera 195b such that the first camera 195a zooms out and the second camera 195b zooms in.

For example, the processor 170 is configured to control zoom of the first camera 195a or the second camera 195b according to a result of the object detection. For example, if a traffic signboard is detected, but details marked on the traffic signboard are not detected, the processor 170 is configured to control the first camera 195a or the second camera 195b to zoom in.

Meanwhile, the processor 170 may automatically control the focus according to zoom control of the camera 195.

FIG. 7C is a block diagram illustrating the interior of the driver assistance system 100.

The driver assistance system 100 of FIG. 7C differs from the driver assistance system 100 of FIG. 7A in that the driver assistance system 100 of FIG. 7C includes around view cameras 195d, 195e, 195f and 195g. Hereinafter, description will be given focusing on this difference.

The driver assistance system 100 may include around view cameras 195d, 195e, 195f and 195g.

Each of the around view cameras 195d, 195e, 195f and 195g may include a lens and a light shield for shielding light incident on the lens.

The around view cameras may include a left camera 195d, a rear camera 195e, a right camera 195f and a front camera 195g.

The left camera 195d acquires an image of the left side view of the vehicle. The rear camera 195e acquires an image of the rear view of the vehicle. The right camera 195f acquires an image of the right side view of the vehicle. The front camera 195g acquires an image of the front view of the vehicle.

Images acquired by the around view cameras 195d, 195e, 195f and 195g are delivered to the processor 170.

The processor 170 may synthesize a left view image, rear view image, right view image and front view image of the vehicle to generate a surroundings-of-vehicle image. In some implementations, the surroundings-of-vehicle image may be a top view image or bird's eye view image. The processor 170 is configured to receive and synthesize the left view image, rear view image, right view image and front view image of the vehicle, and convert the synthesize image into a top view image to generate a surroundings-of-vehicle image.

The processor 170 is configured to detect an object based on the surroundings-of-vehicle image. In particular, in detecting an object, the processor 170 may perform lane detection (LD), vehicle detection (VD), pedestrian detection (PD), bright spot detection (BD), traffic sign recognition (TSR), and road surface detection.

The processor 170 is configured to detect a relative distance to the detected object or a relative speed of the object. Detection of the relative distance or relative speed may be performed as described above with reference to FIG. 7A or 7B.

The processor 170 may individually control zoom of the around view cameras 195d, 195e, 195f and 195g. Zoom control of the processor 170 may be performed in the same manner as zoom control of stereo cameras described above with reference to FIG. 7B.

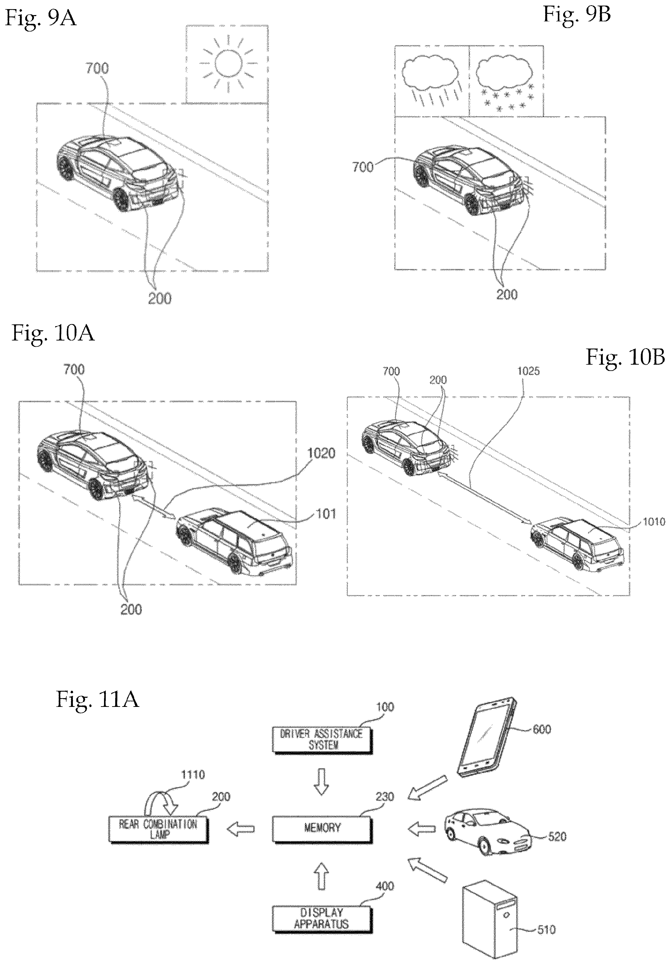

FIG. 8A is a diagram illustrating an example rear combination lamp controlling the light intensity of light output from a display based on a driving environment. FIG. 9A is a diagram illustrating an example rear combination lamp controlling the light intensity of light output from a display based on a driving environment. FIG. 9B is a diagram illustrating an example rear combination lamp controlling the light intensity of light output from a display based on a driving environment. FIG. 8A shows a vehicle 700 traveling in the daytime, and FIG. 8B shows the vehicle 700 traveling at night.

The processor 270 of the rear combination lamp 200 for vehicles is configured to control the display 250 such that intensity of light output from the display 250 is adjusted according to a driving environment. The processor 270 may adjust the intensity of light output from the display 250 by controlling a plurality of light emitting devices included in the display 250.

When the vehicle is traveling in the daytime as shown in FIG. 8A, the processor 270 is configured to control the display 250 such that the intensity of light output from the display 250 is higher than at night.

On the other hand, when the vehicle is traveling at night as shown in FIG. 8B, the processor 270 is configured to control the display 250 such that the intensity of light output from the display 250 is lower than in the daytime.

Since visibility of light output from the rear combination lamp of the vehicle 700 in the daytime is lower than at night, a higher intensity of light should be output in the daytime than at night. According to this operation, information or signals output from the rear combination lamp 200 can be effectively provided to the driver of a following vehicle in the daytime.

Meanwhile, the processor 270 may determine whether it is daytime or night based on the illuminance information sensed by an illuminance sensor included in the sensing unit 760 of the vehicle. For example, if the sensed illuminance is greater or equal to a first reference value, the processor 270 may determine that it is daytime. For example, if the sensed illuminance is less than or equal to a second reference value, the processor 270 may determine that it is daytime.

FIG. 9A shows the vehicle 700 traveling in clear weather, and FIG. 9B shows the vehicle 700 traveling when it rains, snows or is foggy.

The processor 270 of the rear combination lamp is configured to control the display 250 such that the intensity of light output from the display 250 is adjusted according to the weather information.

As shown in FIGS. 9A and 9B, when the vehicle 700 is traveling in rainy, snowy or foggy weather, the processor 270 is configured to control the display 250 such that the intensity of light output from the display 250 is higher than when the vehicle is traveling in clear weather.

In rainy, snowy or foggy weather, visibility of signals or information output from the rear combination lamp of the vehicle 700 to the driver of a following vehicle is lowered, and thus higher intensity of light needs to be output than in clear weather. According to this operation, information or signals output from the rear combination lamp 200 can be effectively provided to the driver of a following vehicle in rainy, snowy or foggy weather.

The weather information may be received from the external devices 600, 510 and 520 through the communication unit 710 of the vehicle. Alternatively, the weather information may be detected in an image acquired by the driver assistance system 100.

FIG. 10A is a diagram illustrating an example rear combination lamp controlling a display based on distance-to-following vehicle information. FIG. 10B is a diagram illustrating an example rear combination lamp controlling a display based on distance-to-following vehicle information.

Referring to FIGS. 10A and 10B, the processor 270 of the rear combination lamp 200 is configured to receive detection information on a following vehicle 1010 through the interface unit 280. For example, the following vehicle detection information may include information on a distance 1020, 1025 between the vehicle 700 and the following vehicle 1010.

The camera 195 of the driver assistance system 100 may be installed to face rearward of the vehicle. In some implementations, the camera 195 may acquire a vehicle rear view image. The driver assistance system 100 is configured to detect the following vehicle 1010 in the acquired vehicle rear view image. The driver assistance system 100 is configured to detect the distance 1020, 1025 to the detected following vehicle 1010. The driver assistance system 100 may acquire information on the distance to the following vehicle 1010 based on change in size of the following vehicle 1010 which is detected in time. Alternatively, if the stereo cameras 195a and 195b are provided, information on the distance to the following vehicle 1010 may be acquired based on the disparity information detected in acquired stereo images. The following vehicle detection information including the distance information may be delivered to the rear combination lamp 200.

The processor 270 of the rear combination lamp 200 may adjust the intensity of light generated by a plurality of light emitting devices included in the display 250, based on the information on the distance 1020, 1025 to the following vehicle 1010. For example, the processor 270 may adjust the intensity of light in proportion to the distance between the vehicle 700 and the following vehicle. For example, the processor 270 may decrease the intensity of light as the distance between the vehicle 700 and the following vehicle decreases. For example, the processor 270 may increase the intensity of light as the distance between the vehicle 700 and the following vehicle increases. As shown in FIGS. 10A and 10B, if the distance to the following vehicle is a second distance 1025, the processor 270 of the rear combination lamp 200 may adjust the intensity of light such that the intensity is higher than when the distance is a first distance 1020.

The processor 270 of the rear combination lamp 200 is configured to control the pattern of generated light by turning on/ off the plurality of light emitting devices included in the display 250 based on the information on the distance 1020, 1025 to the following vehicle 1010. For example, the processor 270 is configured to control the number of light emitting devices which are turned on such that the number increases in proportion to the distance between the vehicle 700 and the following vehicle. For example, the processor 270 is configured to control the number of light emitting devices which are turned off such that the number increases in proportion to the distance between the vehicle 700 and the following vehicle. As shown in FIGS. 10A and 10B, if the distance to the following vehicle is the second distance 1025, the processor 270 of the rear combination lamp 200 increases the number of light emitting devices which are turned on over the number in the case of the first distance 1020.

As the intensity of light or the number of light emitting devices which are turned on/off is controlled in accordance with the distance 1020, 1025 to the following vehicle 1010, signals or information with good visibility may be provided to the driver of the following vehicle 1010, and driving may not interrupted.

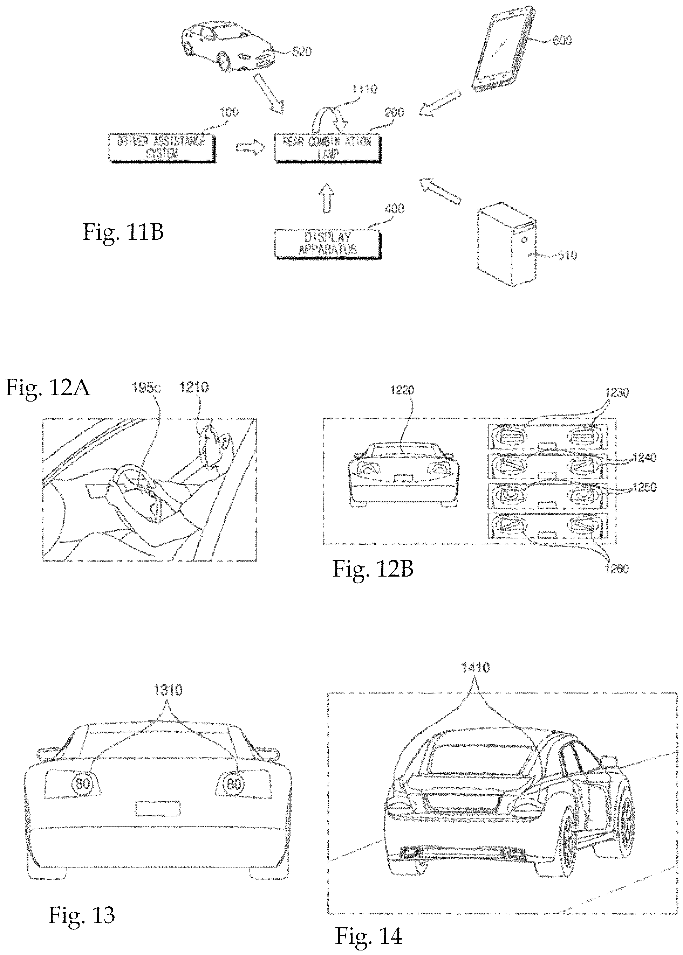

FIG. 11A is a diagram illustrating an example flow of exterior style data. FIG. 11B is a diagram illustrating an example flow of exterior style data.

Exterior style data may be image data provided to allow implementation of exterior styling of the rear combination lamp.

Referring to FIG. 11A, the memory 230 of the rear combination lamp 200 may store at least one exterior style datum. The memory 230 may store exterior style data applied as the default when the vehicle 700 is released from the factory. The memory 230 may also store exterior style data received through the interface unit 280.

The memory 230 may store a plurality of exterior style data. One of the exterior style data stored in the memory 230 may be selected and applied according to user input. For example, the user input may be received through the input unit 210 of the rear combination lamp 200, the input unit 720 of the vehicle 700 or the display apparatus 400 of the vehicle.

The processor 270 of the rear combination lamp 200 is configured to control the display 250 to perform the exterior styling based on the exterior style data stored in the memory 230 (1110). In other words, the processor 270 of the rear combination lamp 200 is configured to control the display 250 such that the exterior style datum selected from among the plurality of exterior style data stored in the memory 230 is displayed on the display 250.

The interface unit 280 of the rear combination lamp 200 is configured to receive exterior style data from the outside. As shown in FIG. 11A, the interface unit 280 is configured to receive exterior style data from the controller 770 of the vehicle 700. The processor 270 of the rear combination lamp 200 is configured to control the display 250 such that exterior styling is performed based on the received exterior style data. In other words, the processor 270 of the rear combination lamp 200 is configured to control the display 250 such that an exterior style image corresponding to the exterior style data received through the interface unit 280 is displayed on the display 250.

Exterior style data may be transmitted from the driver assistance system 100, the display apparatus 400, the mobile terminal 600, the external server 510 or another vehicle 520 to the controller 770.

The exterior style data received from the driver assistance system 100 may be exterior style data generated based on an image acquired by the camera 195.

The exterior style data received from the display apparatus 400 may be exterior style data generated by user input.

Exterior style data may be received from the mobile terminal 600 or the external server 510 by payment or for free.

As shown in FIG. 11B, if the rear combination lamp 200 includes a communication unit 205, exterior style data may be directly received from the mobile terminal 600, the external server 510 or another vehicle 520.

In addition, the interface unit 280 of the rear combination lamp 200 is configured to receive exterior style data not via the controller 770 of the vehicle 700, but directly from the driver assistance system 100 or the display apparatus 400.

The exterior style data received through the interface unit 280 of the rear combination lamp 200 may be stored in the memory 230 of the rear combination lamp 200.

FIG. 12A is a diagram illustrating an example rear combination lamp controlling a display based on user facial expression information. FIG. 12B is a diagram illustrating an example rear combination lamp controlling a display based on user facial expression information.

Referring to FIGS. 12A and 12B, the vehicle 700 may include an internal camera 195c. The internal camera 195c may capture an image of the user's face 1210, and acquire user's emotion or facial expression information based the captured face image. Specifically, the internal camera 195c is configured to detect the eyes and mouth in the face image and track change of the shapes and positions of the eyes and mouth to acquire the user's emotion or facial expression information.

The acquired emotion information or facial expression information may be delivered to the rear combination lamp 200.

As shown in FIG. 12B, the processor 270 of the rear combination lamp 200 is configured to control the display 250 based on the emotion information or facial expression information.

For example, if the facial expression information indicates smile, the processor 270 is configured to control the display 250 such that an exterior style image 1220 corresponding to smile is displayed on the display 250.

For example, if the facial expression information indicates a blank face, the processor 270 is configured to control the display 250 such that an exterior style image 1230 corresponding to absence of expression is displayed on the display 250.

For example, if the facial expression information indicates anger, the processor 270 is configured to control the display 250 such that an exterior style image 1240 corresponding to anger is displayed on the display 250.

For example, if the facial expression information indicates surprise, the processor 270 is configured to control the display 250 such that an exterior style image 1250 corresponding to surprise is displayed on the display 250.

For example, if the facial expression information indicates sadness, the processor 270 is configured to control the display 250 such that an exterior style image 1260 corresponding to sadness is displayed on the display 250.

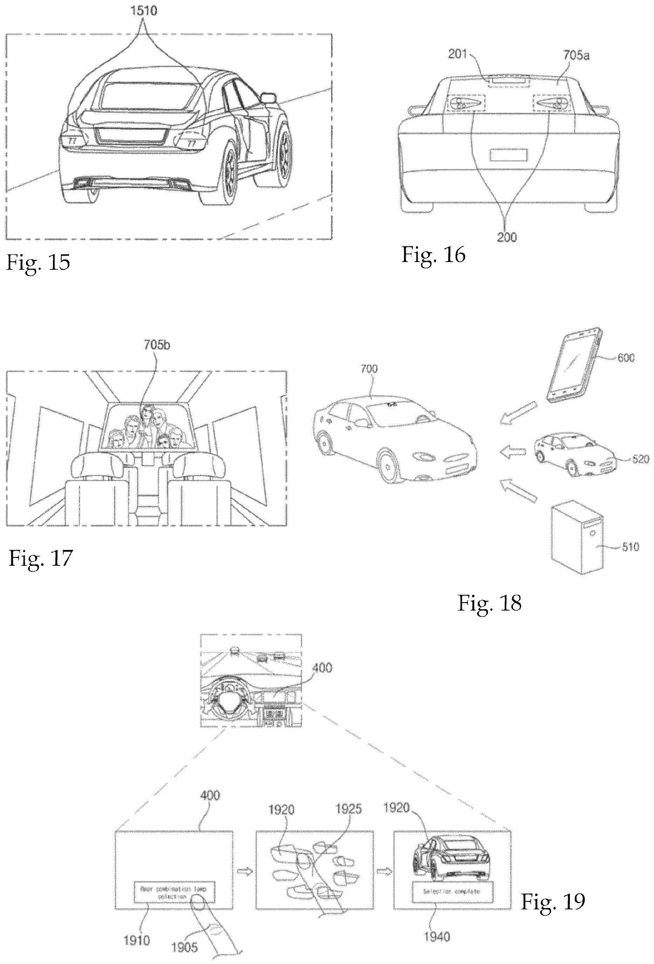

FIG. 13 is a diagram illustrating an example rear combination lamp displaying predetermined information on a display. FIG. 14 is a diagram illustrating an example rear combination lamp displaying predetermined information on a display. FIG. 15 is a diagram illustrating an example rear combination lamp displaying predetermined information on a display.

The processor 270 of the rear combination lamp 200 is configured to receive forward objects information, rearward objects information, navigation information, road information, vehicle condition information, vehicle driving information, in-vehicle situation information or driving environment information through the interface unit 280.

The processor 270 is configured to control the display 250 such that the received forward objects information, rearward objects information, navigation information, road information, vehicle condition information, vehicle driving information, in-vehicle situation information or driving environment information is displayed on the display 250.

The forward objects information may include traffic sign recognition (TSR) information and speed bump detection information.

As shown in FIGS. 13 and 14, the processor 270 is configured to control the display 250 to display the TSR information and speed bump detection information.

The TSR information indicated on a traffic signboard, detection information on a signal output from a traffic light, and detection information on a design or text indicated on a road surface.

The processor 270 is configured to control the display 250 to display information 1310 corresponding to a design or text indicated on a traffic signboard, a signal output from a traffic light, or a design or text indicated on a road surface.

The processor 270 is configured to control the display 250 to display a bump image 1410 corresponding to the speed bump detection information.

The forward objects information may include another-vehicle detection information, two-wheeled vehicle detection information, pedestrian detection information, traffic accident information, construction information or road congestion information. For example, another vehicle, a two-wheeled vehicle, a pedestrian, a traffic accident situation, construction or a road congestion situation may be called an obstacle.

The processor 270 is configured to control the display 250 to display the another-vehicle detection information, two-wheeled vehicle detection information, pedestrian detection information, traffic accident information, construction information, and road congestion information.

The rearward objects information may be information about another vehicle traveling behind the vehicle 700.

The navigation information may include driving route information, predetermined destination information, remaining distance information, driving area information, road information, and speed camera information.

The processor 270 is configured to control the display 250 to display the driving route information, predetermined destination information, remaining distance information, driving area information, road information or speed camera information.

The processor 270 may display driving route information through turn-by-turn (TBT) navigation. The processor 270 is configured to control the display 250 to display the driving route information with a straight arrow, a left turn arrow, a right turn arrow or a U-turn arrow.

The road information may include information about the inclination or curvature of the road on which the vehicle is traveling.

The processor 270 is configured to control the display 250 to display the information about the inclination or curvature of the road.

The vehicle condition information may be On Board Diagnostics (OBD) information. The vehicle condition information may include parking brake state information, high beam on/off information, washer liquid level information, engine oil level information, power source temperature information, remaining energy information, tire pressure information, brake oil level information or door opening information.

The processor 270 is configured to control the display 250 to display the OBD information. The processor 270 is configured to control the display 250 to display the parking brake state information, high beam on/ off information, washer liquid level information, engine oil level information, power source temperature information, remaining energy information, tire pressure information, brake oil level information, or door opening information.

The vehicle driving information may include driving speed information, gear shift information or turn signal information delivered to the turn signal lamp.

The processor 270 is configured to control the display 250 to display the driving speed information 1510, gear shift information or turn signal information.

Meanwhile, the processor 270 is configured to receive, through the interface unit 280, a user input that is input through the input unit 720 of the vehicle 700. In some implementations, the processor 270 is configured to control the display 250 to display information corresponding to the user input.

The in-vehicle situation information may be patient evacuation situation information, emergency aid request information, infant-on-board information or inexperienced driver information. For example, the in-vehicle situation information may be generated through the input unit 720 of the vehicle 700 according to a user input.

The driving environment information may include weather information or time information.

The processor 270 is configured to control the display 250 to display the weather information or time information.

FIG. 16 is a diagram illustrating an example display formed on a rear window glass of a vehicle. FIG. 17 is a diagram illustrating an example display formed on a rear window glass of a vehicle.

Referring to FIG. 16, the display 250 may form a part or the entirety of the rear window glass 705 of the vehicle 700. In some implementations, the display 250 may serve not only as the window glass 705 but also as the rear combination lamp 200.

With the display 250 forming the rear window glass 705, the processor 270 of the rear combination lamp 200 is configured to control the display 250 to display an image 200 corresponding to a stop lamp, taillight, turn signal lamp, fog light, sidelight or reverse light in at least one area of the display 250.

The processor 270 is configured to control the rear combination lamp image displayed on the display 250 to perform the function of the rear combination lamp.

For example, when the vehicle 700 brakes, an image corresponding to the stop lamp in the rear combination lamp image may be controlled to be displayed and to function as the stop lamp.

For example, when sensed illuminance information is received and the sensed illuminance is less than or equal to a reference value, the processor 270 is configured to control an image corresponding to the taillight in the rear combination lamp image to be displayed and to function as the taillight.

For example, when a turn signal is received, the processor 270 is configured to control an image corresponding to the turn signal lamp in the rear combination lamp image to be displayed in a blinking manner and function as the turn signal lamp.

For example, when fog information about a road on which the vehicle is traveling is received, the processor 270 is configured to control an image corresponding to the fog light in the rear combination lamp image to be displayed and function as the fog light. For example, the fog information may be detected by the driver assistance system 100. Alternatively, the fog information may be received through a communication unit 710 of the vehicle.

For example, the processor 270 is configured to control an image corresponding to the sidelight in the rear combination lamp image to be displayed and function as the sidelight.

For example, when gear shift information corresponding to the backup state is received, the processor 270 is configured to control an image corresponding to the reverse light in the rear combination lamp image and function as the reverse light.

Images 200 and 201 corresponding to the stop lamp may include an image 201 corresponding to a center high mounted stop lamp (CHMSL).

In some implementations, the rear combination lamp 200 may also perform the function of the CHMSL such that the following vehicle readily recognizes the vehicle even though a separate CHMSL is not provided.

Meanwhile, the display 250 may include a first display unit 705a and a second display unit 705b. The first display unit 705a may be adapted to face outward of the vehicle 700 as shown in FIG. 16. The second display unit 705b may be adapted to face inward of the vehicle 700 as shown in FIG. 17.

As described above, the first display unit 705a may display an image for implementing exterior styling of the rear combination lamp.

The second display unit 705b may display content to be provided to the user as exemplarily shown in FIG. 17.

The content provided through the second display unit 705b may include content related to various kinds of images, SNS, Internet, a telephone call, an instant message, navigation, an email, a document or a schedule.

Meanwhile, the processor 270 of the rear combination lamp 200 is configured to control the second display unit 705b and make the second display unit turn dark to block external light. Alternatively, the processor 270 of the rear combination lamp 200 is configured to control the second display unit 705b and make the second display unit turn dark such that the inside of the vehicle cannot be seen from the outside.

FIG. 18 is a diagram illustrating an example vehicle receiving exterior style data.

Referring to FIG. 18, the vehicle 700 is configured to receive exterior style data from an external device 600, 510 and 520 through the communication unit 710. In some implementations, the exterior style data may be received for free or by payment. The external device may be a mobile terminal 600, an external server 510 or another vehicle 520.

If the external device is the mobile terminal 600, the vehicle 700 is configured to receive the exterior style data through a short-range communication module 713.

If the external device is the server 510 or another vehicle 520, the vehicle 700 is configured to receive the exterior style data through a wireless Internet module 712.

Meanwhile, exterior style data may be generated through user input using the display apparatus 400. The display apparatus 400 may display an exterior style image corresponding to the exterior style data generated according to the user input. When the exterior style image is selected, the display apparatus 400 may provide exterior style data corresponding to the exterior style image to the rear combination lamp 200.

Exterior style data may be generated based on an image acquired through the driver assistance system 100. Alternatively, exterior style data may be pre-stored in the memory 730 of the vehicle 700 or the memory 230 of the rear combination lamp 200.

FIG. 19 is a diagram illustrating an example operation of selecting one of a plurality of rear combination data.

Referring to FIG. 19, the display apparatus 400 is configured to receive user input 1905 for selecting an exterior style design. For example, if a touch input to a button 1910 for selecting an exterior style is received, the display apparatus 400 displays a plurality of exterior style images.

Exterior style data corresponding to the exterior style images may be pre-stored in the memory 230 of the rear combination lamp 200 or the memory 730 of the vehicle 700.

Exterior style data corresponding to the exterior style images may be generated by user input through the display apparatus 400.

Exterior style data corresponding to the exterior style images may be received from the external devices 600, 510 and 520.

Exterior style data corresponding to the exterior style images may be generated based on an image acquired by the driver assistance system 100.

With the plurality of exterior style images displayed, the display apparatus 400 is configured to receive user input 1925 for selecting a first exterior style image 1920 from among the exterior style images.

If the first exterior style image 1920 is selected, the display apparatus 400 may display an image the vehicle 700 with the first exterior style image applied. The display apparatus 400 may display a selection complete message 1940.

Thereafter, the display apparatus 400 may transmit exterior style data corresponding to the first exterior style image to the rear combination lamp 200. The processor 270 of the rear combination lamp 200 is configured to control the display 250 based on the received exterior style data to perform styling.

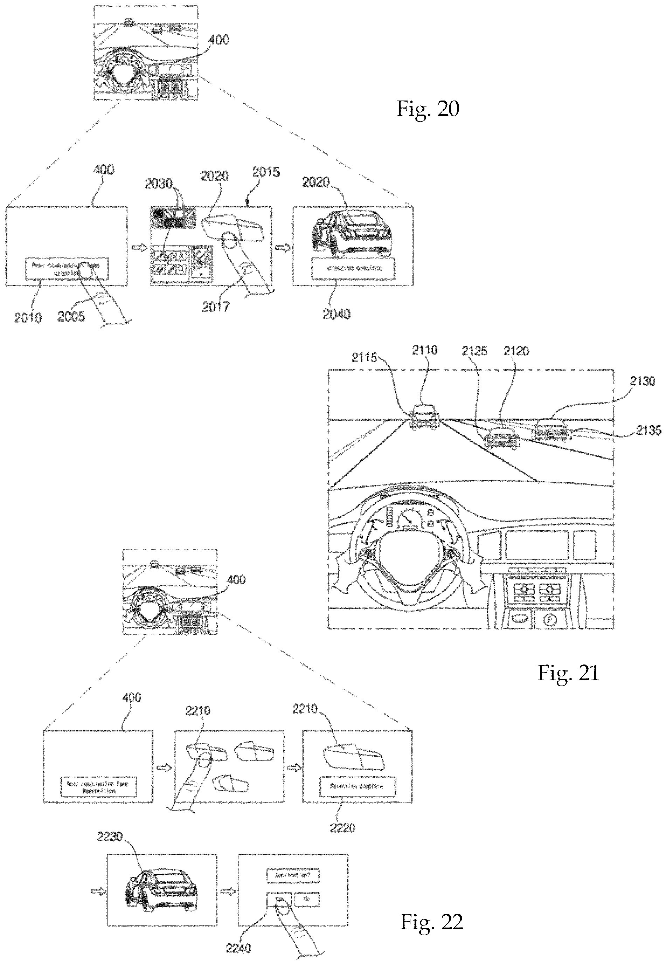

FIG. 20 is a diagram illustrating an example display apparatus for generating exterior style data based on a user input.

Referring to FIG. 20, the display apparatus 400 is configured to receive a user input for generating an exterior style image. For example, if touch input to a button 2010 for generating an exterior style image is received, the display apparatus 400 may display a screen 2015 for generating the exterior style image.

With the screen 2015 displayed, the display apparatus 400 is configured to receive user input 2017 for creating an exterior style image. Icon type tools 2030 for creating an exterior style image may be displayed in one area of the screen 2015.

The display apparatus 400 may create an exterior style image according to the user input 2017.

With an exterior style image created, the display apparatus 400 may display an image of the vehicle 700 with the created exterior style image applied. The display apparatus 400 may display a creation complete message 2040.

The display apparatus 400 may transmit exterior style data corresponding to the created exterior style image to the rear combination lamp 200. The processor 270 of the rear combination lamp 200 is configured to control the display 250 based on the received exterior style data to perform styling.

FIG. 21 is a diagram illustrating an example exterior styling performed based on an image acquired through a driver assistance system. FIG. 22 is a diagram illustrating an example exterior styling performed based on an image acquired through a driver assistance system.

Referring to FIG. 21, the driver assistance system 100 may acquire a front view image or surroundings image of the vehicle. For example, the camera 195 may include a mono camera, stereo cameras 195a and 195b, or around view cameras 195d, 195e, 195f and 195g.

The driver assistance system 100 is configured to detect other vehicles 2110, 2120 and 2130 in the acquired front view image or surroundings image of the vehicle. In particular, the driver assistance system 100 is configured to detect rear combination lamps 2115, 2125 and 2135 of other vehicles. The detection operation may be performed by the processor 170 of the driver assistance system 100.

The driver assistance system 100 may generate exterior style data based on the detected rear combination lamps 2115, 2125 and 2135 of other vehicles. The driver assistance system 100 may transmit the generated exterior style data to the rear combination lamp 200. The exterior style data generated by the driver assistance system 100 may be transmitted to the display apparatus 400.

The driver assistance system 100 may perform only operations leading up to the detection operation, and then transmit data for the detected vehicles 2110, 2120 and 2130 or the detected rear combination lamps 2115, 2125 and 2135 of other vehicles to the rear combination lamp 200. In some implementations, the processor 270 of the rear combination lamp 200 may generate exterior style data based on the received data. The exterior style data generated by the rear combination lamp 200 may be transmitted to the display apparatus 400.

Referring to FIG. 22, the display apparatus 400 is configured to receive exterior style data generated by the driver assistance system 100 or the rear combination lamp 200.

The display apparatus 400 may display at least one exterior style image corresponding to the received exterior style data.

If a first exterior style image 2210 is selected according to user input, the display apparatus 400 may magnify and display the selected first exterior style image 2210. The display apparatus 400 may be display a selection complete message 2220.

Thereafter, the display apparatus 400 may display an image 2230 of the vehicle 700 with the first exterior style image applied.

Thereafter, the display apparatus 400 is configured to receive a user selection input 2240 for determining whether to perform rear combination lamp styling of the vehicle 700 based on the first exterior style image.

Once the selection input is received, the display apparatus 400 may transmit exterior style data corresponding to the first exterior style image to the rear combination lamp 200. The processor 270 of the rear combination lamp 200 is configured to control the display 250 to display an exterior style image corresponding to the received exterior style data, thereby performing exterior styling.

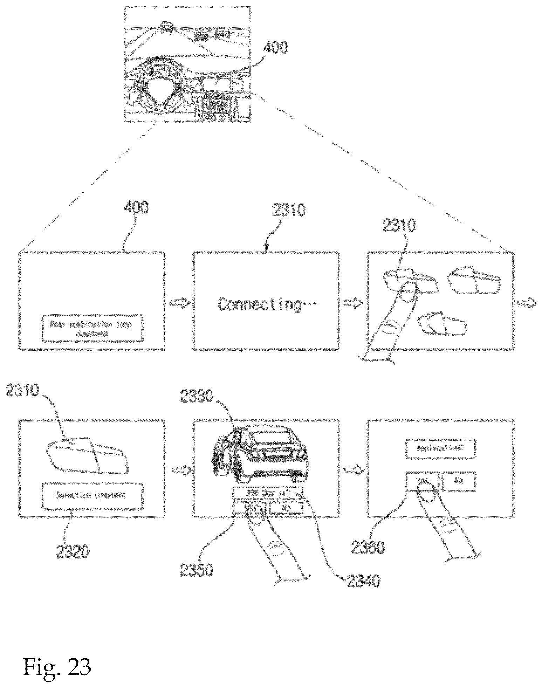

FIG. 23 is a diagram illustrating an example exterior styling performed based on exterior style data received from an external device. Referring to FIG. 23, the vehicle 700 is configured to receive exterior style data from the external devices 600, 510 and 520.

The display apparatus 400 may display a screen for indicating progress in receiving the exterior style data.

The display apparatus 400 may display at least one exterior style image corresponding to the received exterior style data.

If a first exterior style image 2310 is selected according to user input, the display apparatus 400 may magnify and display the selected first exterior style image 2310. The display apparatus 400 may display a selection complete message 2320.

Thereafter, the display apparatus 400 may display an image 2330 of the vehicle 700 with the first exterior style image applied.

If receiving an exterior style image is charged, the display apparatus 400 may display a price 2340 for downloading the selected first exterior style image. The display apparatus 400 may display a screen 2340 for confirming whether or not to purchase the first exterior style image.

When a purchase selection 2350 of the user is received, the display apparatus 400 is configured to receive a user selection input 2360 for confirming whether or not to perform rear combination lamp styling of the vehicle 700 based on the first exterior style image.

If a select input is received, the display apparatus 400 may transmit exterior style data corresponding to the first exterior style image to the rear combination lamp 200. The processor 270 of the rear combination lamp 200 is configured to control the display 250 to display an exterior style image corresponding to the received exterior style data, thereby performing exterior styling.

The methods, techniques, systems, and apparatuses described herein may be implemented in digital electronic circuitry or computer hardware, for example, by executing instructions stored in tangible computer-readable storage media.

Apparatuses implementing these techniques may include appropriate input and output devices, a computer processor, and/or tangible computer-readable storage media storing instructions for execution by a processor.

A process implementing techniques disclosed herein may be performed by a processor executing instructions stored on a tangible computer-readable storage medium for performing desired functions by operating on input data and generating appropriate output. Suitable processors include, by way of example, both general and special purpose microprocessors. Suitable computer-readable storage devices for storing executable instructions include all forms of non-volatile memory, including, by way of example, semiconductor memory devices, such as Erasable Programmable Read-Only Memory (EPROM), Electrically Erasable Programmable Read-Only Memory (EEPROM), and flash memory devices; magnetic disks such as fixed, floppy, and removable disks; other magnetic media including tape; and optical media such as Compact Discs (CDs) or Digital Video Disks (DVDs). Any of the foregoing may be supplemented by, or incorporated in, specially designed application-specific integrated circuits (ASICs).

Although the operations of the disclosed techniques may be described herein as being performed in a certain order and/or in certain combinations, in some implementations, individual operations may be rearranged in a different order, combined with other operations described herein, and/or eliminated, and desired results still may be achieved. Similarly, components in the disclosed systems may be combined in a different manner and/or replaced or supplemented by other components and desired results still may be achieved.

As is apparent from the above description, at least one of the following effects can be obtained.

First, user convenience can be provided by changing styling of a rear combination lamp according to user selection based on a plurality of exterior style data stored in a memory.

Second, styling of the rear combination lamp can be changed in compliance with traffic laws.

Third, user convenience can be provided by applying a rear combination lamp style of another vehicle acquired through a camera.

Fourth, user convenience can be provided by performing rear combination lamp styling based on styling data received from an external device.

Fifth, user convenience can be provided by performing rear combination lamp styling based on styling data generated by a user.

Sixth, various kinds of information can be provided to following vehicles by displaying the information on the rear combination lamp.

Seventh, information can be provided to the driver of a following vehicle with visibility of the information enhanced by adaptively changing the intensity or pattern of light output from the rear combination lamp based on the driving environment or a distance to a nearby vehicle.

## Claims

1. Vehicle (700) comprising a camera (195) and a rear combination lamp (200), the rear combination lamp (200) comprising:
- a display (250) disposed on a vehicle (700), the display (250) comprising a plurality of light emitting devices,
- an interface unit (280) configured to receive exterior style data, and
- a processor (270) configured to control the display to perform exterior styling using the plurality of light emitting devices, wherein the processor (270) is configured to control the display (250) to perform the exterior styling based on the received exterior style data,
**characterized in that**
the rear combination lamp (200) is further comprising:
an interface unit configured to receive location information about a road, wherein the processor is configured to:
- determine the at least one condition related to driving of the vehicle by determining traffic laws applied to the road,
- select, from among multiple exterior style images, the at least one exterior style image to display by selecting, from among multiple exterior style images, at least one exterior style image to display based on the traffic laws applied to the road.

2. Vehicle (700) according to claim 1, **wherein** the display (270) includes organic light emitting diodes (OLED).

3. Vehicle (700) according to claim 1 or 2, **wherein** the processor (270) is configured to control the display (250) to present an image corresponding to a stop lamp, taillight, turn signal lamp, fog light, sidelight or reverse light on at least one part of the display.

4. Vehicle (700) according to anyone of claims 1 to 3, **wherein** the processor (270) is configured to set a maximum value and a minimum value of an intensity of light outputted from the display, and is configured to control the plurality of light emitting devices to output light with an intensity between the maximum value and the minimum value.

5. Vehicle (700) according to anyone of claims 1 to 4, **wherein** the processor (270) is configured to control the display (250) to adjust an intensity of light outputted from the display based on a driving environment.

6. Vehicle (700) according to claim 1, **wherein** the display (250) is located on a rear window glass (705) of the vehicle (700).
